(19) Europäisches Patentamt
European Patent Office
Office européen des brevets

(11) **EP 2 945 443 A1**

(12) **EUROPEAN PATENT APPLICATION**
published in accordance with Art. 153(4) EPC

(43) Date of publication:
**18.11.2015 Bulletin 2015/47**

(51) Int Cl.:
***H04W 72/04*** (2009.01)

(21) Application number: **13870606.4**

(86) International application number:
**PCT/CN2013/070202**

(22) Date of filing: **08.01.2013**

(87) International publication number:
**WO 2014/107838 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **ZHANG, Lei**
**Beijing 100025 (CN)**

• **WANG, Yi**
**Beijing 100025 (CN)**
• **ZHOU, Hua**
**Beijing 100025 (CN)**

(74) Representative: **Fenlon, Christine Lesley**
**Haseltine Lake LLP**
**Lincoln House, 5th Floor**
**300 High Holborn**
**London WC1V 7JH (GB)**

(54) **DEMODULATION REFERENCE SIGNAL CONFIGURATION AND MAPPING METHOD, CHANNEL ESTIMATION METHOD AND DEVICE**

(57) Embodiments of the present disclosure provide a method for configuring demodulation reference signals, a method for mapping demodulation reference signals , a method for performing channel estimation and apparatus thereof. The method includes: configuring demodulation reference signals (DMRSs) being carried by four orthogonal frequency division multiplexing (OFDM) symbols in one physical resource block (PRB) pair; wherein the four OFDM symbols are divided into two groups, each group consisting of two adjacent OFDM symbols, and the distance between the two groups of OFDM symbols being greater than five OFDM symbols. With the method and apparatus of the embodiments of the present disclosure, performance of channel estimation based on DMRSs in advanced releases of LTE (Release 12 or higher) may be improved.

301

configuring DMRS being carried by four OFDM symbols in one RB; wherein the four OFDM symbols are divided into two groups, each group consisting of two adjacent OFDM symbols, and the distance between the two groups of OFDM symbols being greater than five OFDM symbols

Fig. 3

EP 2 945 443 A1

**Description**

<u>Technical Field</u>

The present disclosure relates to the field of communications, and in particular to methods and apparatus for configuring demodulation reference signals, mapping demodulation reference signals, and performing channel estimation.

<u>Background</u>

In LTE (long-term evolution) releases 8-11, each downlink subframe will carry a PDCCD (physical downlink control channel), which is used to indicate UE (User Equipment) with scheduling in a present downlink subframe or scheduling of a corresponding uplink subframe, configure uplink transmission power, and activate or release SPS (semi-persistent scheduling) transmission. A PDCCH is transmitted in a former first to fourth symbols in a subframe, and the number of symbols occupied by it is determined by a system bandwidth and the number of UEs scheduled in one subframe. Different from a PDSCH (physical downlink shared channel), transmission resources of a PDCCH is not divided by RBs (resource blocks), and a PDCCH transmission unit is dispersed in a whole PDCCH region by an interleaver. A PDCCH usually takes a cell-specific reference signal (CRS) as a reference signal for demodulation.

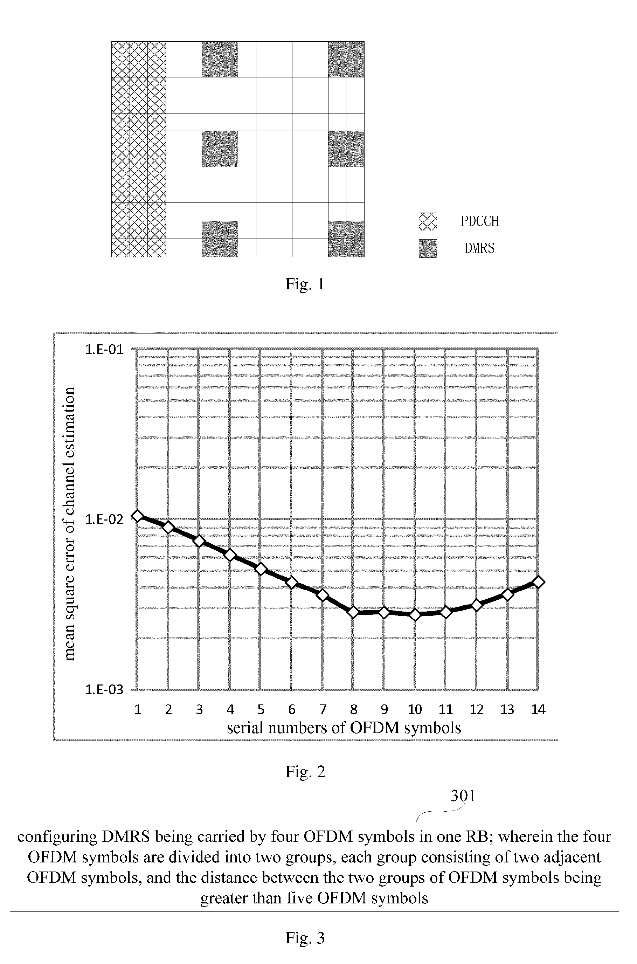

A PDSCH is used to carry high-layer signaling or UE data, and in the releases later than Release 9, a PDSCH transmitted in modes of TM8 and TM9 takes a DMRS (demodulation reference signal) as a reference signal for demodulation. Distribution of general DMRS of other subframes than special subframe types 1, 2, 3, 4, 6, 7 and 8 in a TDD (time division duplexing) transmission mode in one PRB pair is shown in Figure 1, in which OFDM (orthogonal frequency division multiplexing) symbols in the latticed part are possible PDCCH transmission region, and other OFDM symbols are used to carry OFDM symbols of a PDSCH. In such a case, the existing pilot pattern is located at relatively intermediate position in the PDSCH region. If channel estimation is performed based on the pilots of the existing pilot pattern, an error of an estimation result is relatively small.

A new carrier type (NCT) shall be introduced into the latest LTE release, Release 12. In an NCT carrier, a PDCCH shall be replaced with an ePDCCH (enhanced PDCCH). A transmission method of an ePDCCH is similar to that of the PDSCH, and its transmission resources are divided by PRB pairs. As no legacy PDCCH is used in the NCT any longer, resources in each PRB pair for carrying PDSCHs or ePDCCHs starts from a first OFDM symbol. All REs (resource elements) carrying data in each PRB pair of the NCT are demodulated based on DMRSs. In such a case, an existing pilot pattern (such as the DMRS patterns shown in Fig. 1) is located at a position to the right in the whole PRB pair, which may result in degradation of channel estimation quality of several former OFDM symbols in the PRB pair, thereby affecting reliability of subsequent demodulation and decoding.

Figure 2 gives a curve of an error of channel estimation of an ETU (extended typical urban) channel model varies with serial numbers of OFDM symbols in one PRB pair when a moving speed is 30 km/h, an SNR (signal to noise ratio) is 20 dB, receive-transmit antennas are 2*2 and a rank is 2. It can be seen from Fig. 2 that the error varies relatively much along the time domain, and the errors of channel estimation in the leftmost three OFDM symbols relatively to other OFDM symbols obviously become large.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

<u>Summary</u>

An object of the embodiments of the present disclosure is to provide a method and apparatus for configuring DMRSs, mapping DMRSs and performing channel estimation, so as to improve performance of channel estimation based on DMRSs in advanced releases of LTE (Release 12 or higher).

According to a first aspect of the embodiments of the present disclosure, there is provided a method for configuring demodulation reference signals, including:

configuring demodulation reference signals (DMRSs) being carried by four orthogonal frequency division multiplexing (OFDM) symbols in one physical resource block (PRB) pair; wherein the four OFDM symbols are divided into two groups, each group consisting of two adjacent OFDM symbols, and the distance between the two groups of OFDM symbols being greater than five OFDM symbols.

According to a second aspect of the embodiments of the present disclosure, there is provided a method for mapping demodulation reference signals, including:

configuring demodulation reference signals of a PRB pair for an LTE system according to the method for configuring demodulation reference signals as described in the first aspect; and

performing resource mapping on the configured demodulation reference signals according to the following formula:

$$a_{k,l}^{(p)} = w_p(l') \cdot r(3 \cdot l' \cdot N_{RB}^{\max,DL} + 3 \cdot n_{PRB} + m');$$

where,

$$w_p(i) = \begin{cases} \overline{w}_p(i) & (m' + n_{PRB}) \bmod 2 = 0 \\ \overline{w}_p(3-i) & (m' + n_{PRB}) \bmod 2 = 1 \end{cases}$$

$$k = 5m' + N_{sc}^{RB} n_{PRB} + k'$$

$$k' = \begin{cases} 1 & p \in \{7,8,11,13\} \\ 0 & p \in \{9,10,12,14\} \end{cases};$$

$m'=0,1,2$

$l'=0,1,2,3$

and where, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence, $N_{RB}^{\max,DL}$ is the number of RBs carried by a maximum downlink bandwidth, $w_p(i)$ is an orthogonal cover code sequence, $N_{sc}^{RB}$ is the number of the subcarrier contained in each PRB pair, $n_{PRB}$ is the serial number of the PRB pair where the DMRS is present, $p$ is the number of the ports, l', k' and m' are intermediate variables, and $l$ is a time domain serial number of the RE where the DMRS is present,

$$l = \begin{cases} 0 & l'=0 \\ 1 & l'=1 \\ 5 & l'=2 \\ 6 & l'=3 \end{cases}, \text{ or}$$

$$l = \begin{cases} 1 & l'=0 \\ 2 & l'=1 \\ 4 & l'=2 \\ 5 & l'=3 \end{cases}, \text{or } l = \begin{cases} 1 & l'=0 \\ 2 & l'=1 \\ 5 & l'=2 \\ 6 & l'=3 \end{cases}, \text{ or } l = \begin{cases} 2 & l'=0 \\ 3 & l'=1 \\ 5 & l'=2 \\ 6 & l'=3 \end{cases}, \text{ or } l = \begin{cases} 3 & l'=0 \\ 4 & l'=1 \\ 5 & l'=2 \\ 6 & l'=3 \end{cases}.$$

According to a third aspect of the embodiments of the present disclosure, there is provided a method for configuring demodulation reference signals, including:

configuring less than six groups of DMRSs in each PRB pair;

wherein each group of DMRSs consists of two REs carrying the DMRSs, the two REs carrying the DMRSs being positioned in the same subcarrier and occupying two adjacent OFDM symbols.

According to a fourth aspect of the embodiments of the present disclosure, there is provided a method for mapping demodulation reference signals, including:

configuring demodulation reference signals of a PRB pair for an LTE system according to the method for configuring demodulation reference signals as described in the third aspect; and

performing resource mapping on the configured demodulation reference signals according to the following formula:

$$a_{k,l}^{(p)} = w_p(l') \cdot r(3 \cdot l' \cdot N_{RB}^{\max,DL} + 3 \cdot n_{PRB} + m')$$

where, $w_p(i) = \begin{cases} \overline{w}_p(i) & (m'+n_{PRB})\bmod 2 = 0 \\ \overline{w}_p(3-i) & (m'+n_{PRB})\bmod 2 = 1 \end{cases}$ $\quad k = 5m'+N_{sc}^{RB}n_{PRB}+k'$ $\quad k'=\begin{cases} 1 & p \in \{7,8,11,13\} \\ 0 & p \in \{9,10,12,14\} \end{cases}$

$l' = 0,1,2,3$ ;

and where, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence, $N_{RB}^{\max,DL}$ is the number of RBs carried by a maximum downlink bandwidth, $w_p(i)$ is an orthogonal cover code sequence, $N_{sc}^{RB}$ is the number of the subcarriers contained in each PRB pair, $n_{PRB}$ is the serial number of the PRB pair where the DMRS is present, $p$ is the number of the ports, l', k' and m' are intermediate variables; wherein,

$m'=$ 0,1, or

$m'=$1,2 , or

$m'=$ 0,2, or $\quad m'=\begin{cases} 0,1 & \text{for port } 7,8,11,13 \\ 1,2 & \text{for port } 9,10,12,14 \end{cases}$, or $\quad m'=\begin{cases} 1,2 & \text{for port } 7,8,11,13 \\ 0,1 & \text{for port } 9,10,12,14 \end{cases}$,

or $\quad m'=\begin{cases} 1,2 & \text{if } l'=0,1 \\ 0,1 & \text{if } l'=2,3 \\ 0,1 & \text{if } l'=0,1 \\ 1,2 & \text{if } l'=2,3 \end{cases} \begin{array}{l} \text{for port } 7,8,11,13 \\ \\ \text{for port } 9,10,12,14 \end{array}$, or $\quad m'=\begin{cases} 0,1 & \text{if } l'=0,1 \\ 1,2 & \text{if } l'=2,3 \\ 1,2 & \text{if } l'=0,1 \\ 0,1 & \text{if } l'=2,3 \end{cases} \begin{array}{l} \text{for port } 7,8,11,13 \\ \\ \text{for port } 9,10,12,14 \end{array}$,

or $\quad m'=\begin{cases} 1,2 & \text{if } l'=0,1 \\ 0,1 & \text{if } l'=2,3 \end{cases}$, or $\quad m'=\begin{cases} 0,1 & \text{if } l'=0,1 \\ 1,2 & \text{if } l'=2,3 \end{cases}$, or $\quad m'=\begin{cases} 1 & \text{if } l'=0,1 \\ 0,2 & \text{if } l'=2,3 \end{cases}$, or

$m'=\begin{cases} 0,2 & \text{if } l'=0,1 \\ 1 & \text{if } l'=2,3 \end{cases}$, or $\quad m'=\begin{cases} 1 & \text{if } l'=0,1 \\ 0,2 & \text{if } l'=2,3 \\ 0,2 & \text{if } l'=0,1 \\ 1 & \text{if } l'=2,3 \end{cases} \begin{array}{l} \text{for port } 7,8,11,13 \\ \\ \text{for port } 9,10,12,14 \end{array}$, or

$m'=\begin{cases} 0,2 & \text{if } l'=0,1 \\ 1 & \text{if } l'=2,3 \\ 1 & \text{if } l'=0,1 \\ 0,2 & \text{if } l'=2,3 \end{cases} \begin{array}{l} \text{for port } 7,8,11,13 \\ \\ \text{for port } 9,10,12,14 \end{array}$ .

According to a fifth aspect of the embodiments of the present disclosure, there is provided an eNB, applicable to configuring DMRSs, wherein the eNB includes:

a configuring unit configured to configure DMRSs being carried by four OFDM symbols in one PRB pair; wherein the four OFDM symbols are divided into two groups, each group consisting of two adjacent OFDM symbols, and the distance between the two groups of OFDM symbols being greater than five OFDM symbols.

According to a sixth aspect of the embodiments of the present disclosure, there is provided an eNB, applicable to mapping DMRSs, wherein the eNB includes:

a configuring unit configured to configure demodulation reference signals of a PRB pair for an LTE system according to the method for configuring demodulation reference signals as described in the first aspect; and
a mapping unit configured to perform resource mapping on the configured demodulation reference signals according to the following formula:

$$a_{k,l}^{(p)} = w_p(l') \cdot r(3 \cdot l' \cdot N_{RB}^{max,DL} + 3 \cdot n_{PRB} + m') ;$$

$$w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases} \qquad\qquad k = 5m' + N_{sc}^{RB} n_{PRB} + k'$$

$$k' = \begin{cases} 1 & p \in \{7,8,11,13\} \\ 0 & p \in \{9,10,12,14\} \end{cases} ;$$

$m' = 0,1,2$

$l' = 0,1,2,3$

where, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence, $N_{RB}^{max,DL}$ is the number of RBs carried by a maximum downlink bandwidth, $w_p(i)$ is an orthogonal cover code sequence, $N_{sc}^{RB}$ is the number of the subcarries contained in each PRB pair, $n_{PRB}$ is the serial number of the PRB pair where the DMRS is present, $p$ is the number of the ports, l', k' and m' are intermediate variables, and

$l$ is a time domain serial number of the RE where the DMRS is present, $l = \begin{cases} 0 & l'=0 \\ 1 & l'=1 \\ 5 & l'=2 \\ 6 & l'=3 \end{cases}$, or $l = \begin{cases} 1 & l'=0 \\ 2 & l'=1 \\ 4 & l'=2 \\ 5 & l'=3 \end{cases}$,

or $l = \begin{cases} 1 & l'=0 \\ 2 & l'=1 \\ 5 & l'=2 \\ 6 & l'=3 \end{cases}$, or $l = \begin{cases} 2 & l'=0 \\ 3 & l'=1 \\ 5 & l'=2 \\ 6 & l'=3 \end{cases}$, or $l = \begin{cases} 3 & l'=0 \\ 4 & l'=1 \\ 5 & l'=2 \\ 6 & l'=3 \end{cases}$.

According to a seventh aspect of the embodiments of the present disclosure, there is provided an eNB, applicable to configuring DMRSs, wherein the eNB includes:

a configuring unit configured to configure less than six groups of DMRSs in each PRB pair, wherein each group of DMRSs consists of two REs carrying the DMRSs, the two REs carrying the DMRSs being positioned in the same subcarrier and occupying two adjacent OFDM symbols.

According to an eighth aspect of the embodiments of the present disclosure, there is provided an eNB, applicable to mapping DMRSs, wherein the eNB includes:

a configuring unit configured to configure demodulation reference signals of a PRB pair for an LTE system according to the method for configuring demodulation reference signals as described in the third aspect; and
a mapping unit configured to perform resource mapping on the configured demodulation reference signals according to the following formula:

$$a_{k,l}^{(p)} = w_p(l') \cdot r(3 \cdot l' \cdot N_{RB}^{max,DL} + 3 \cdot n_{PRB} + m') ;$$

where, $w_p(i) = \begin{cases} \overline{w}_p(i) & (m'+n_{PRB})\bmod 2 = 0 \\ \overline{w}_p(3-i) & (m'+n_{PRB})\bmod 2 = 1 \end{cases}$ $\quad k = 5m'+N_{sc}^{RB}n_{PRB}+k'$ $\quad k' = \begin{cases} 1 & p \in \{7,8,11,13\} \\ 0 & p \in \{9,10,12,14\} \end{cases}$

$l' = 0,1,2,3$ ;

and where, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence, $N_{RB}^{\max,DL}$ is the number of RBs carried by a maximum downlink bandwidth, $w_p(i)$ is an orthogonal cover code sequence, $N_{sc}^{RB}$ is the number of the subcarriers contained in each PRB pair, $n_{PRB}$ is the serial number of the PRB pair where the DMRS is present, $p$ is the number of the ports, $l'$, $k'$ and $m'$ are intermediate variables; wherein,

$m' = 0,1$, or

$m' = 1,2$ , or

$m' = \quad 0,2,$ or $\quad m' = \begin{cases} 0,1 & \text{for port } 7,8,11,13 \\ 1,2 & \text{for port } 9,10,12,14 \end{cases}$ , or $\quad m' = \begin{cases} 1,2 & \text{for port } 7,8,11,13 \\ 0,1 & \text{for port } 9,10,12,14 \end{cases}$ , or

$m' = \begin{cases} 1,2 & \text{if } l' = 0,1 \\ 0,1 & \text{if } l' = 2,3 \\ 0,1 & \text{if } l' = 0,1 \\ 1,2 & \text{if } l' = 2,3 \end{cases} \begin{array}{l} \text{for port } 7,8,11,13 \\ \\ \text{for port } 9,10,12,14 \end{array}$ , or $\quad m' = \begin{cases} 0,1 & \text{if } l' = 0,1 \\ 1,2 & \text{if } l' = 2,3 \\ 1,2 & \text{if } l' = 0,1 \\ 0,1 & \text{if } l' = 2,3 \end{cases} \begin{array}{l} \text{for port } 7,8,11,13 \\ \\ \text{for port } 9,10,12,14 \end{array}$ ,

or $m' = \begin{cases} 1,2 & \text{if } l' = 0,1 \\ 0,1 & \text{if } l' = 2,3 \end{cases}$ , or $\quad m' = \begin{cases} 0,1 & \text{if } l' = 0,1 \\ 1,2 & \text{if } l' = 2,3 \end{cases}$ , or $\quad m' = \begin{cases} 1 & \text{if } l' = 0,1 \\ 0,2 & \text{if } l' = 2,3 \end{cases}$ , or

$m' = \begin{cases} 0,2 & \text{if } l' = 0,1 \\ 1 & \text{if } l' = 2,3 \end{cases}$ , or $\quad m' = \begin{cases} 1 & \text{if } l' = 0,1 \\ 0,2 & \text{if } l' = 2,3 \\ 0,2 & \text{if } l' = 0,1 \\ 1 & \text{if } l' = 2,3 \end{cases} \begin{array}{l} \text{for port } 7,8,11,13 \\ \\ \text{for port } 9,10,12,14 \end{array}$ , or

$m' = \begin{cases} 0,2 & \text{if } l' = 0,1 \\ 1 & \text{if } l' = 2,3 \\ 1 & \text{if } l' = 0,1 \\ 0,2 & \text{if } l' = 2,3 \end{cases} \begin{array}{l} \text{for port } 7,8,11,13 \\ \\ \text{for port } 9,10,12,14 \end{array}$ .

According to a ninth aspect of the embodiments of the present disclosure, there is provided a method for performing channel estimation, including:

extracting DMRSs from received signals according to positions of DMRSs configured in accordance with the method as described in the first or the third aspect;
generating a DMRS sequence according to the DMRSs configured by an eNB; and
performing channel estimation on a channel passed by the received signals in transmission according to the extracted DMRSs and the generated DMRS sequence.

According to a tenth aspect of the embodiments of the present disclosure, there is provided user equipment (UE), including:

an extracting unit configured to extract DMRSs from received signals according to positions of DMRSs configured in accordance with the method as described in the first or the third aspect;

a generating unit configured to generate a DMRS sequence according to the DMRSs configured by an eNB; and
a channel estimating unit configured to perform channel estimation on a channel passed by the received signals in transmission according to the extracted DMRSs and the generated DMRS sequence.

According to an eleventh aspect of the embodiments of the present disclosure, there is provided a communication system, including the eNB as described in the fifth aspect or the sixth aspect or the seventh aspect of the eighth aspect and the UE as described in the tenth aspect.

An embodiment of the present disclosure further provides a computer-readable program, wherein when the program is executed in an eNB, the program enables a computer to carry out the method for configuring demodulation reference signals as described in the first aspect or the third aspect or the method for mapping demodulation reference signals as described in the second aspect or the fourth aspect in the eNB.

An embodiment of the present disclosure further provides a storage medium in which a computer-readable program is stored, wherein the computer-readable program enables a computer to carry out the method for configuring demodulation reference signals as described in the first aspect or the third aspect or the method for mapping demodulation reference signals as described in the second aspect or the fourth aspect in an eNB.

An embodiment of the present disclosure further provides a computer-readable program, wherein when the program is executed in terminal equipment, the program enables a computer to carry out the method for performing channel estimation as described in the ninth aspect in the terminal equipment.

An embodiment of the present disclosure further provides a storage medium in which a computer-readable program is stored, wherein the computer-readable program enables a computer to carry out the method for performing channel estimation as described in the ninth aspect in terminal equipment.

An advantage of the embodiments of the present disclosure exists in that with the method and apparatus of the embodiments of the present disclosure, performance of channel estimation based on DMRSs in advanced releases of LTE (Release 12 or higher) may be improved.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments. In the drawings:

Figure 1 is a schematic diagram of distribution of existing DMRSs in one PRB pair;
Figure 2 is a curve of an error of channel estimation varies with serial numbers of OFDM symbols in one PRB pair;
Figure 3 is a flowchart of the method for configuring demodulation reference signals of Embodiment 1 of the present disclosure;
Figures 4A-4E are schematic diagrams of distribution of configuring DMRSs according to the method of Embodiment 1;
Figure 5 is a schematic diagram of simulation result of the DMRSs shown in Fig. 4C and the DMRSs shown in Fig. 1;
Figure 6 is a flowchart of the method for mapping demodulation reference signals of Embodiment 2 of the present disclosure;
Figure 7 is a flowchart of the method for configuring demodulation reference signals of Embodiment 3 of the present disclosure;
Figure 8 is a schematic diagram of a pattern position of distribution of the DMRSs corresponding to Fig. 1;

Figures 9A-9E are schematic diagrams of distribution of DMRSs configured according to the method of Embodiment 4 with any two groups DMRSs of identical frequency domain positions being removed;

Figures 10A-10D are schematic diagrams of distribution of DMRSs configured according to the method of Embodiment 4 with diagonal outermost two groups DMRSs being removed;

Figures 11A-11D are schematic diagrams of distribution of DMRSs configured according to the method of Embodiment 4 with three groups DMRSs being removed in a zigzag manner;

Figure 12 is a schematic diagram of distribution of DMRSs according to another embodiment of the present disclosure in which the DMRSs are configured by lowering a frequency domain density;

Figure 13 is a schematic diagram of distribution of DMRSs according to a further embodiment of the present disclosure in which the DMRSs are configured by lowering a time domain density;

Figure 14 is a flowchart of the method for mapping demodulation reference signals of Embodiment 4 of the present disclosure;

Figure 15 is a schematic diagram of the structure of the eNB of Embodiment 5 of the present disclosure;

Figure 16 is a schematic diagram of the structure of the eNB of Embodiment 6 of the present disclosure;

Figure 17 is a schematic diagram of the structure of the eNB of Embodiment 7 of the present disclosure;

Figure 18 is a schematic diagram of the structure of the eNB of Embodiment 8 of the present disclosure;

Figure 19 is a flowchart of the method for performing channel estimation of an embodiment of the present disclosure; and

Figure 20 is a schematic diagram of the structure of the UE of an embodiment of the present disclosure.

Detailed Description

The foregoing and other features of the embodiments of the present disclosure shall become apparent with reference to the drawings and the following description. These embodiments are illustrative only, and are not intended to limit the present disclosure. For the principle and modes of implementation of the present disclosure to be easily understood by those skilled in the art, the modes of implementation of the present disclosure shall be described taking configuring and mapping of DMRSs after new-type carriers are introduced into Release 12 as examples. However, it should be understood that the present disclosure is not limited to the above configuring and mapping of DMRSs in the above release, nor limited to configuring and mapping of reference signals being DMRSs, and is applicable to other systems related to configuring and mapping of reference signals and other reference signals.

Embodiment 1

An embodiment of the present disclosure provides a method for configuring demodulation reference signals. Fig. 3 is a flowchart of the method. As shown in Fig. 3, the method includes:

step 301: configuring demodulation reference signals (DMRSs) being carried by four orthogonal frequency division multiplexing (OFDM) symbols in one physical resource block (PRB) pair; wherein the four OFDM symbols are divided into two groups, each group consisting of two adjacent OFDM symbols, and the distance between the two groups of OFDM symbols being greater than five OFDM symbols.

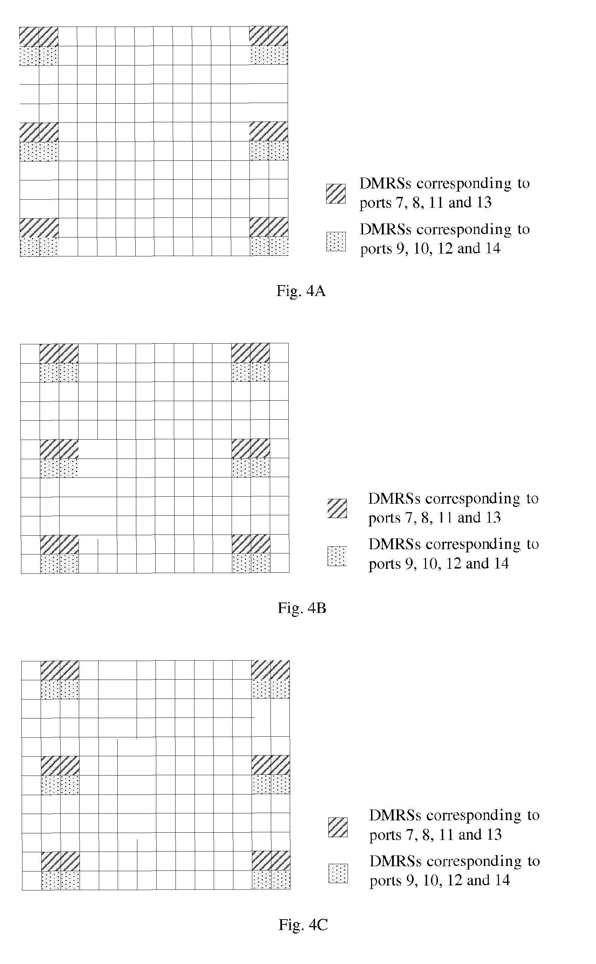

Figs. 4A-4E are schematic diagrams of distribution of DMRSs in one PRB pair in configuring DMRSs according to the method of this embodiment.

In an implementation of this embodiment, positions of the two groups of OFDM symbols are symmetrical relative to a boundary of two slots constituting the PRB pair, as shown in Figs. 4A and 4B.

Referring to Fig. 4A, the first group of OFDM symbols are former two OFDM symbols of the first slot, and the second group of OFDM symbols are latter two OFDM symbols of the second slot.

Referring to Fig. 4B, the first group of OFDM symbols are the second and third OFDM symbols of the first slot, and the second group of OFDM symbols are the fifth and sixth OFDM symbols of the second slot.

In another implementation of this embodiment, the positions of the two groups of OFDM symbols are asymmetrical relative to the boundary of the two slots constituting the PRB pair, as shown in Figs. 4C-4E.

Referring to Fig. 4C, the first group of OFDM symbols are the second and third OFDM symbols of the first slot, and the second group of OFDM symbols are the latter two OFDM symbols of the second slot.

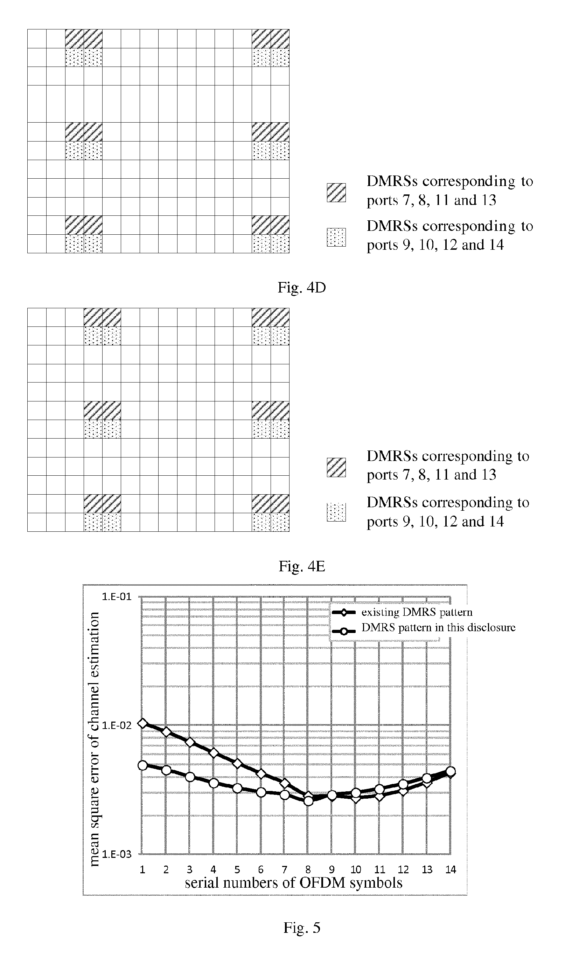

Referring to Fig. 4D, the first group of OFDM symbols are the third and fourth OFDM symbols of the first slot, and the second group of OFDM symbols are the latter two OFDM symbols of the second slot.

Referring to Fig. 4E, the first group of OFDM symbols are the fourth and fifth OFDM symbols of the first slot, and the second group of OFDM symbols are the latter two OFDM symbols of the second slot.

In this embodiment, the positions of the DMRSs in the frequency domain are not limited. In a preferred embodiment, their positions in the frequency domain are identical to those in the standards. For example, the DMRSs corresponding to one or more ports occupy the first, sixth and eleventh resource elements (REs) in the frequency domain of a physical resource block pair (PRB pair) by using a code division scheme, or the DMRSs corresponding to one or more ports occupy the second, seventh and twelfth REs in the frequency domain of a PRB pair by using the code division scheme. As shown in Figs. 4A-4E, the DMRSs occupying the first, sixth and eleventh REs in the frequency domain correspond to ports 7, 8, 11 and 13, and the DMRSs occupying the second, seventh and twelfth REs in the frequency domain correspond to ports 9, 10, 12 and 14. Or, the DMRSs occupying the first, sixth and eleventh REs in the frequency domain correspond to ports 9, 10, 12 and 14, and the DMRSs occupying the second, seventh and twelfth REs in the frequency domain correspond to ports 7, 8, 11 and 13 (not shown). In another embodiment, their positions in the frequency domain may be different from those in the standards. For example, they may lower a frequency domain density based on the standards. For example, any two groups of identical frequency domain positions may be removed from six groups of DMRSs in the frequency domain, or diagonal outermost two groups may be removed from six groups of DMRSs in the frequency domain, or three groups may be removed from six groups of DMRSs in the frequency domain in a zigzag manner, which shall be described in detail in the following embodiments.

Fig. 5 is a schematic diagram of simulation result of the distribution of the DMRSs shown in Fig. 4C and the distribution of the DMRSs shown in Fig. 1. It can be seen from Fig. 5 that in comparison with the DMRSs configured by using an existing method, the DMRSs configured by using the method of the embodiment of the present disclosure outstandingly improve performance of channel estimation.

With the method of the embodiment of the present disclosure, performance of channel estimation based on DMRSs in advanced releases of LTE (Release 12 or higher) may be improved.

Embodiment 2

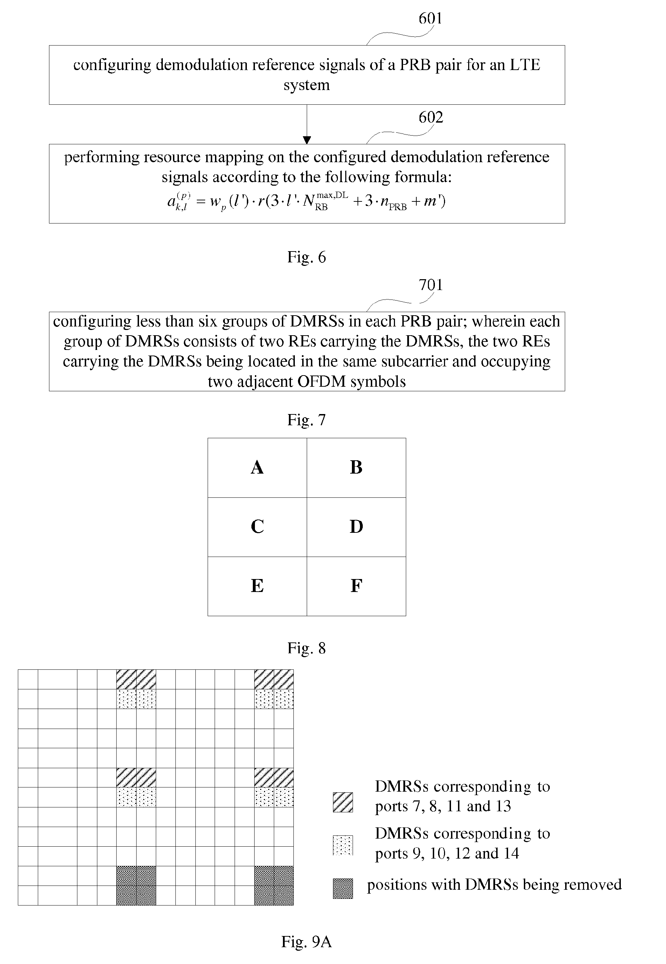

An embodiment of the present disclosure further provides a method for mapping demodulation reference signals. This method is based on the configuration of the DMRSs of Embodiment 1. Configuring DMRSs according to the method of Embodiment 1, a DMRS sequence may be generated by using a method identical to an existing standard method; however, a method for mapping DMRSs is different from the existing standards. Fig. 6 is a flowchart of the method for mapping DMRSs of this embodiment. Referring to Fig. 6, the method includes:

step 601: configuring demodulation reference signals of a PRB pair for an LTE system;

wherein, the DMRSs may be configured by using the method of Embodiment 1, the contents of which being incorporated herein, and being not going to be described herein any further;

step 602: performing resource mapping on the configured demodulation reference signals according to the following formula:

$$a_{k,l}^{(p)} = w_p(l') \cdot r(3 \cdot l' \cdot N_{RB}^{\max, DL} + 3 \cdot n_{PRB} + m') ;$$

where,

$$w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases}$$

$$k = 5m' + N_{sc}^{RB} n_{PRB} + k'$$

$$k' = \begin{cases} 1 & p \in \{7,8,11,13\} \\ 0 & p \in \{9,10,12,14\} \end{cases} ;$$

$m' = 0,1,2$

$l' = 0,1,2,3$

where, values of $l$ are four integers, corresponding to $l'$ one by one; and in this embodiment, $l = \begin{cases} 0 & l' = 0 \\ 1 & l' = 1 \\ 5 & l' = 2 \\ 6 & l' = 3 \end{cases}$ ,

$$\text{or } l = \begin{cases} 1 & l'=0 \\ 2 & l'=1 \\ 4 & l'=2 \\ 5 & l'=3 \end{cases}, \text{ or } l = \begin{cases} 1 & l'=0 \\ 2 & l'=1 \\ 5 & l'=2 \\ 6 & l'=3 \end{cases}, \text{ or } l = \begin{cases} 2 & l'=0 \\ 3 & l'=1 \\ 5 & l'=2 \\ 6 & l'=3 \end{cases}, \text{ or } l = \begin{cases} 3 & l'=0 \\ 4 & l'=1 \\ 5 & l'=2 \\ 6 & l'=3 \end{cases};$$

wherein, definitions of the signs in the above formula are identical to those in Section 6.10.3 of 3GPP TS36.211, which shall not be described herein any further. For example, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence (refer to Section 6.10.3 of 3GPP TS36.211 for a detailed method of generation), $N_{RB}^{max,DL}$ is the number of RBs carried by a maximum downlink bandwidth (in an LTE system, this parameter is 110, refer to Section 6.2.1 of 3GPP TS36.211), $k$ is the frequency domain serial number of the RE where the DMRS is present, $l$ is the time domain serial number of the RE where the DMRS is present, k', m' and l' are intermediate variables, $w_p(i)$ is an orthogonal cover code sequence, $n_{PRB}$ is the serial number of the PRB pair where the DMRS is present, and $N_{sc}^{RB}$ is the number of the subcarriers contained in each PRB pair;

wherein, corresponding to the distribution of the DMRSs shown in Fig. 4A, $l = \begin{cases} 0 & l'=0 \\ 1 & l'=1 \\ 5 & l'=2 \\ 6 & l'=3 \end{cases}$, corresponding to the

distribution of the DMRSs shown in Fig. 4B, $l = \begin{cases} 1 & l'=0 \\ 2 & l'=1 \\ 4 & l'=2 \\ 5 & l'=3 \end{cases}$, corresponding to the distribution of the DMRSs shown in Fig. 4C, $l = \begin{cases} 1 & l'=0 \\ 2 & l'=1 \\ 5 & l'=2 \\ 6 & l'=3 \end{cases}$, corresponding to the distribution of the DMRSs shown in Fig. 4D, $l = \begin{cases} 2 & l'=0 \\ 3 & l'=1 \\ 5 & l'=2 \\ 6 & l'=3 \end{cases}$,

corresponding to the distribution of the DMRSs shown in Fig. 4E, $l = \begin{cases} 3 & l'=0 \\ 4 & l'=1 \\ 5 & l'=2 \\ 6 & l'=3 \end{cases}$;

wherein, particular values of $w_p(i)$ are shown in the table below (this table comes from 3GPP TS36.211 Table 6.10.3.2-1):

| Antenna ports $p$ | $[\overline{w}_p(0)\ \overline{w}_p(1)\ \overline{w}_p(2)\ \overline{w}_p(3)]$ |
|---|---|
| 7 | [+1 +1 +1 +1] |
| 8 | [+1 -1 +1 -1] |
| 9 | [+1 +1 +1 +1] |
| 10 | [+1 -1 +1 -1] |
| 11 | [+1 +1 -1 -1] |
| 12 | [-1 -1 +1 +1] |

(continued)

| Antenna ports $p$ | $[\overline{w}_p(0)\ \overline{w}_p(1)\ \overline{w}_p(2)\ \overline{w}_p(3)]$ |
|---|---|
| 13 | [+1 -1 -1 +1] |
| 14 | [-1 +1 +1 -1] |

By configuring DMRSs by using the method of Embodiment 1 and mapping DMRSs by using the method of this embodiment, performance of channel estimation based on DMRSs in advanced releases of LTE (Release 12 or higher) may be improved.

Embodiment 3

An embodiment of the present disclosure further provides a method for configuring demodulation reference signals. Different from the method of Embodiment 1, in this embodiment, the number of groups of DMRSs in each PRB pair is less than 6; wherein, a pattern of each group of DMRSs consists of such two REs that are located within the same subcarrier and occupy two adjacent OFDM symbols.

Fig. 7 is a flowchart of the method for configuring demodulation reference signals of this embodiment 3 of the present disclosure. Referring to Fig. 7, the method includes:

step 701: configuring less than six groups of DMRSs in each PRB pair; wherein each group of DMRSs consists of two REs carrying the DMRSs, the two REs carrying the DMRSs being located in the same subcarrier and occupying two adjacent OFDM symbols. In an embodiment, the DMRSs corresponding to one or more ports occupy the first, sixth and/or eleventh REs in a frequency domain by using a code division scheme, or the DMRSs corresponding to one or more ports occupy the second, seventh and/or twelfth REs in a frequency domain by using a code division scheme.

In this embodiment, positions of the DMRSs in a time domain are not limited. For example, they may be based on the time domain positions of the DMRSs in an existing standard shown in Fig. 1, and may also be based on the time domain positions of the DMRSs of this embodiment shown in Figs. 4A-4E. For the sake of convenience, description is given taking that letters A-F shown in Fig. 8 correspond respectively to six groups of DMRSs to which one or some ports shown in Fig. 1 or Figs. 4A-4E correspond and that the method of this embodiment is based on the time domain positions of the DMRSs in an existing standard shown in Fig. 1 as examples.

In an implementation of this embodiment, the above six groups of DMRSs may be reduced to four groups, that is, configuring four groups of DMRSs in each PRB pair; preferably, densities and positions of the four groups of DMRSs in the time domain are kept constant (that is, being based on the time domain positions of the existing DMRS patterns, or being based on the time domain positions of the DMRS patterns of the implementations of Embodiment 1), and the four groups of DMRSs are configured at any two groups of three groups of positions in a frequency domain; that is, removing any two groups of identical frequency domain positions from the six groups of DMRSs in the frequency domain. For example, the group A and the group B are removed, or the group C and the group D are removed, or the group E and the group F are removed.

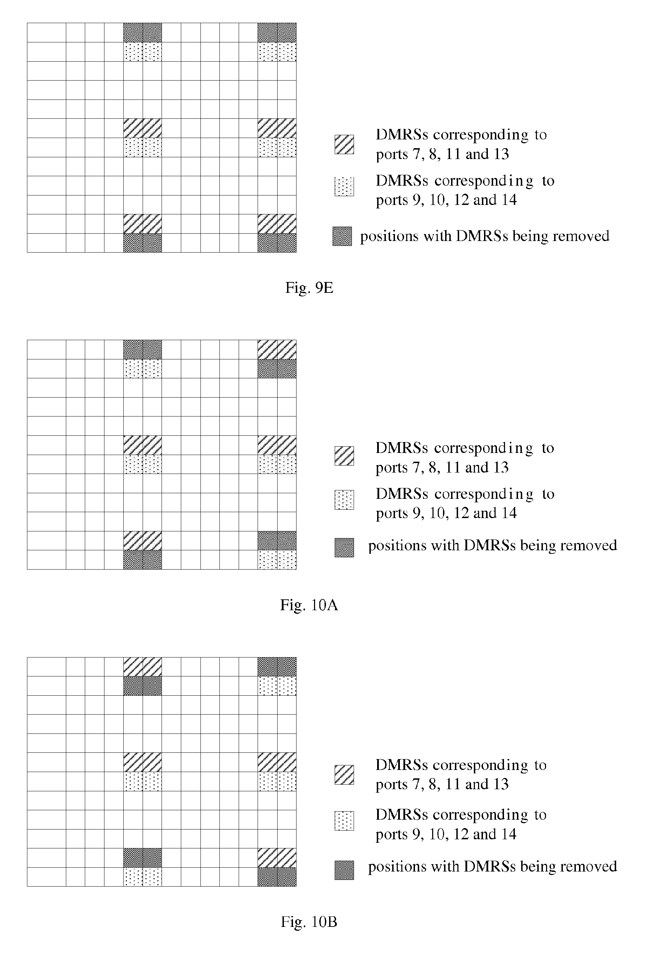

Figs. 9A-9E are schematic diagrams of DMRSs after being configured according to the method of this implementation.

As shown in Fig. 9A, in this implementation, densities and positions of DMRSs of groups A, B, C and D of DMRSs corresponding the ports 7, 8, 11 and 13 are kept constant, while groups E and F of DMRSs corresponding the ports 7, 8, 11 and 13 are removed; and at the same time, densities and positions of DMRSs of groups A, B, C and D of DMRSs corresponding the ports 9, 10, 12 and 14 are kept constant, while groups E and F of DMRSs corresponding the ports 9, 10, 12 and 14 are removed.

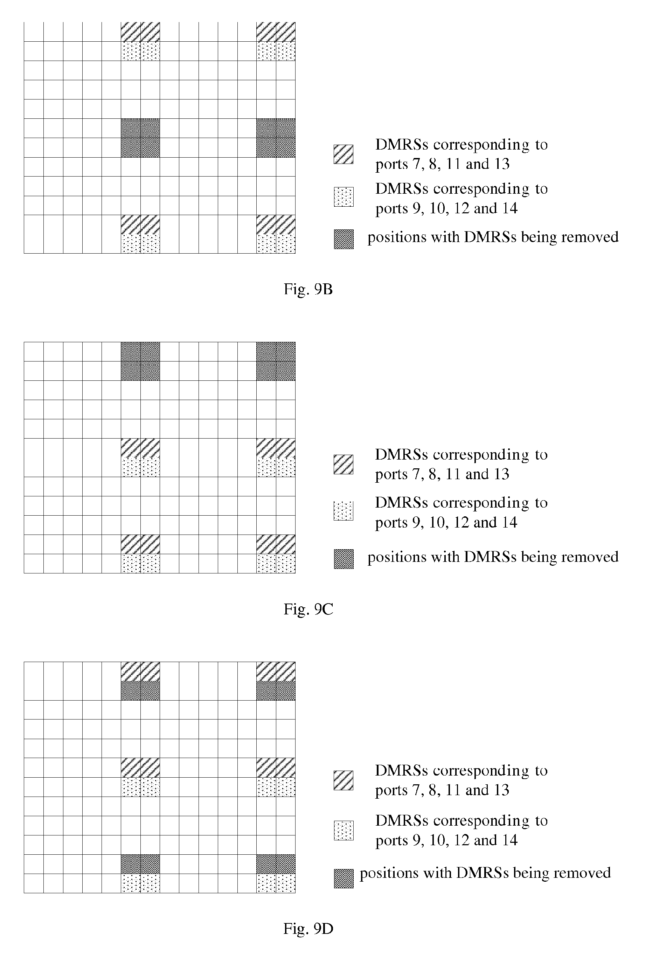

As shown in Fig. 9B, in this implementation, densities and positions of DMRSs of groups A, B, E and F of DMRSs corresponding the ports 7, 8, 11 and 13 are kept constant, while groups C and D of DMRSs corresponding the ports 7, 8, 11 and 13 are removed; and at the same time, densities and positions of DMRSs of groups A, B, E and F of DMRSs corresponding the ports 9, 10, 12 and 14 are kept constant, while groups C and D of DMRSs corresponding the ports 9, 10, 12 and 14 are removed.

As shown in Fig. 9C, in this implementation, densities and positions of DMRSs of groups C, D, E and F of DMRSs corresponding the ports 7, 8, 11 and 13 are kept constant, while groups A and B of DMRSs corresponding the ports 7, 8, 11 and 13 are removed; and at the same time, densities and positions of DMRSs of groups C, D, E and F of DMRSs corresponding the ports 9, 10, 12 and 14 are kept constant, while groups A and B of DMRSs corresponding the ports 9, 10, 12 and 14 are removed.

As shown in Fig. 9D, in this implementation, densities and positions of DMRSs of groups A, B, C and D of DMRSs corresponding the ports 7, 8, 11 and 13 are kept constant, while groups E and F of DMRSs corresponding the ports 7, 8, 11 and 13 are removed; and at the same time, densities and positions of DMRSs of groups C, D, E and F of DMRSs corresponding the ports 9, 10, 12 and 14 are kept constant, while groups A and B of DMRSs corresponding the ports 9, 10, 12 and 14 are removed.

As shown in Fig. 9E, in this implementation, densities and positions of DMRSs of groups C, D, E and F of DMRSs corresponding the ports 7, 8, 11 and 13 are kept constant, while groups A and B of DMRSs corresponding the ports 7, 8, 11 and 13 are removed; and at the same time, densities and positions of DMRSs of groups A, B, C and D of DMRSs corresponding the ports 9, 10, 12 and 14 are kept constant, while groups E and F of DMRSs corresponding the ports 9, 10, 12 and 14 are removed.

In another implementation of this embodiment, the above six groups of DMRSs may be reduced to four groups, that is, configuring four groups of DMRSs in each PRB pair, and keeping densities and positions of the four groups of DMRSs in the time domain constant (that is, being based on the time domain positions of the existing DMRS patterns, or being based on the time domain positions of the DMRS patterns of the implementations of Embodiment 1); preferably, two groups of DMRSs of the four groups of DMRSs are configured at an intermediate group of three groups of positions in a frequency domain, and the other two groups of DMRSs of the four groups of DMRSs are configured at the first and third groups of the three groups of positions in the frequency domain, with the DMRSs configured at the first group of positions and the DMRSs configured at the third group of positions being positioned at different slots of the PRB pair. That is, diagonal outermost two groups are removed from the six groups of DMRSs in the frequency domain. For example, the group A and the group F are removed, or the group B and the group E are removed.

Figs. 10A-10D are schematic diagrams of DMRSs after being configured according to the method of this implementation.

As shown in Fig. 10A, in this implementation, densities and positions of DMRSs of groups B, C, D and E of DMRSs corresponding the ports 7, 8, 11 and 13 are kept constant, while groups A and F of DMRSs corresponding the ports 7, 8, 11 and 13 are removed; and at the same time, densities and positions of DMRSs of groups A, C, D and F of DMRSs corresponding the ports 9, 10, 12 and 14 are kept constant, while groups B and E of DMRSs corresponding the ports 9, 10, 12 and 14 are removed.

As shown in Fig. 10B, in this implementation, densities and positions of DMRSs of groups A, C, D and F of DMRSs corresponding the ports 7, 8, 11 and 13 are kept constant, while groups B and E of DMRSs corresponding the ports 7, 8, 11 and 13 are removed; and at the same time, densities and positions of DMRSs of groups B, C, D and E of DMRSs corresponding the ports 9, 10, 12 and 14 are kept constant, while groups A and F of DMRSs corresponding the ports 9, 10, 12 and 14 are removed.

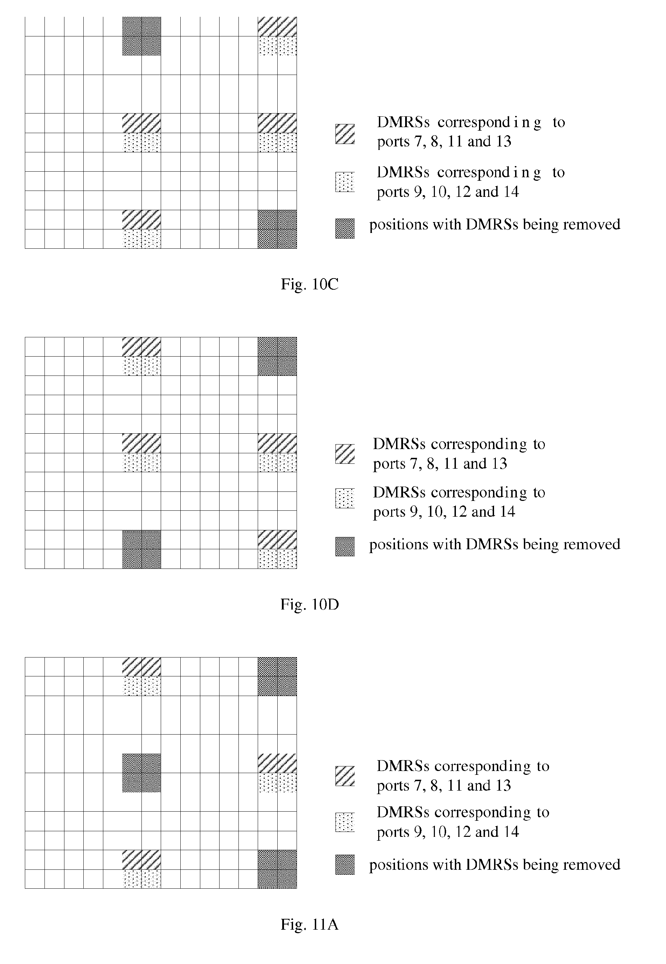

As shown in Fig. 10C, in this implementation, densities and positions of DMRSs of groups B, C, D and E of DMRSs corresponding the ports 7, 8, 11 and 13 are kept constant, while groups A and F of DMRSs corresponding the ports 7, 8, 11 and 13 are removed; and at the same time, densities and positions of DMRSs of groups B, C, D and E of DMRSs corresponding the ports 9, 10, 12 and 14 are kept constant, while groups A and F of DMRSs corresponding the ports 9, 10, 12 and 14 are removed.

As shown in Fig. 10D, in this implementation, densities and positions of DMRSs of groups A, C, D and F of DMRSs corresponding the ports 7, 8, 11 and 13 are kept constant, while groups B and E of DMRSs corresponding the ports 7, 8, 11 and 13 are removed; and at the same time, densities and positions of DMRSs of groups A, C, D and F of DMRSs corresponding the ports 9, 10, 12 and 14 are kept constant, while groups B and E of DMRSs corresponding the ports 9, 10, 12 and 14 are removed.

In a further implementation of this embodiment, the above six groups of DMRSs may be reduced to three groups, that is, configuring three groups of DMRSs in each PRB pair, and keeping densities and positions of the three groups of DMRSs in the time domain constant (that is, being based on the time domain positions of the existing DMRS patterns, or being based on the time domain positions of the DMRS patterns of the implementations of Embodiment 1); preferably, the three groups of DMRSs are respectively configured on three groups of positions in a frequency domain, with the DMRSs configured at the first group of positions and the DMRSs configured at the third group of positions being positioned at the same slot of the PRB pair, and the DMRSs configured at the second group of positions and the DMRSs configured at the first and third groups of positions being positioned at different slots of the PRB pair. That is, three groups are removed from the six groups of DMRSs in the frequency domain in a zigzag manner. For example, the group A, the group D and the group E are removed, or the group B, the group C and the group F are removed.

Figs. 11A-11D are schematic diagrams of DMRSs after being configured according to the method of this implementation.

As shown in Fig. 11A, in this implementation, densities and positions of DMRSs of groups A, D and E of DMRSs corresponding the ports 7, 8, 11 and 13 are kept constant, while groups B, C and F of DMRSs corresponding the ports 7, 8, 11 and 13 are removed; and at the same time, densities and positions of DMRSs of groups A, D and E of DMRSs corresponding the ports 9, 10, 12 and 14 are kept constant, while groups B, C and F of DMRSs corresponding the ports 9, 10, 12 and 14 are removed.

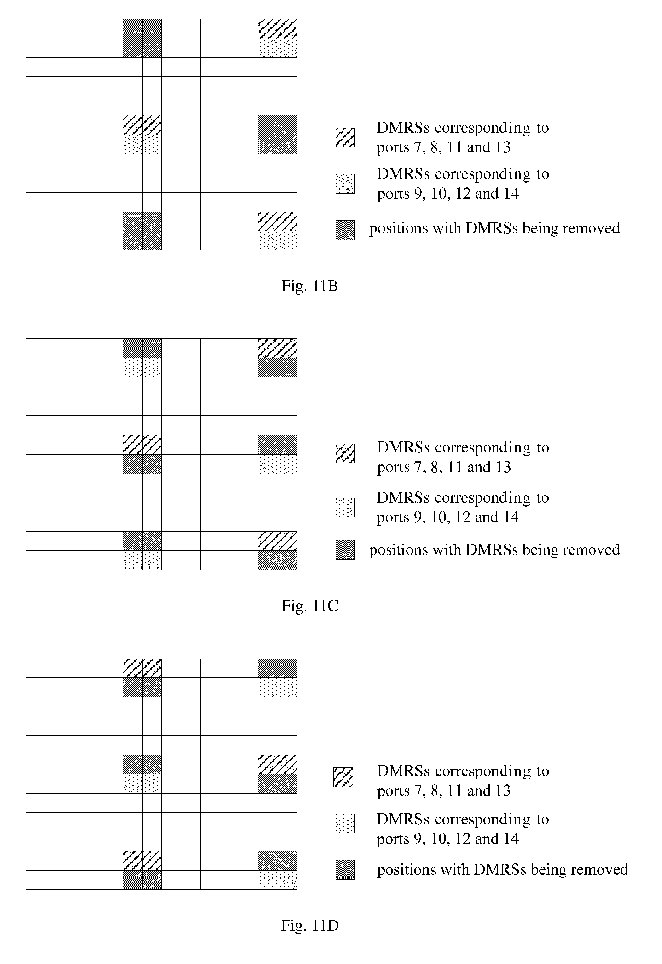

As shown in Fig. 11B, in this implementation, densities and positions of DMRSs of groups B, C and F of DMRSs corresponding the ports 7, 8, 11 and 13 are kept constant, while groups A, D and E of DMRSs corresponding the ports 7, 8, 11 and 13 are removed; and at the same time, densities and positions of DMRSs of groups B, C and F of DMRSs corresponding the ports 9, 10, 12 and 14 are kept constant, while groups A, D and E of DMRSs corresponding the ports 9, 10, 12 and 14 are removed.

As shown in Fig. 11C, in this implementation, densities and positions of DMRSs of groups B, C and F of DMRSs corresponding the ports 7, 8, 11 and 13 are kept constant, while groups A, D and E of DMRSs corresponding the ports 7, 8, 11 and 13 are removed; and at the same time, densities and positions of DMRSs of groups A, D and E of DMRSs corresponding the ports 9, 10, 12 and 14 are kept constant, while groups B, C and F of DMRSs corresponding the ports 9, 10, 12 and 14 are removed.

As shown in Fig. 11 D, in this implementation, densities and positions of DMRSs of groups A, D and E of DMRSs corresponding the ports 7, 8, 11 and 13 are kept constant, while groups B, C and F of DMRSs corresponding the ports 7, 8, 11 and 13 are removed; and at the same time, densities and positions of DMRSs of groups B, C and F of DMRSs corresponding the ports 9, 10, 12 and 14 are kept constant, while groups A, D and E of DMRSs corresponding the ports 9, 10, 12 and 14 are removed.

This embodiment is described in the above implementations taking that the existing methods for configuring DMRSs as well as existing patterns as examples. It can be seen from the figures that in the above method for configuring DMRSs, the four OFDM symbols in the time domain are respectively positioned in two slots of one PRB pair, and two adjacent OFDM symbols are taken as one group, a distance between the two groups of OFDM symbols being equal to 5 OFDM symbols, which corresponds to the existing configuration patterns of the DMRSs. However, this embodiment is not limited thereto. As described above, this embodiment may also be based on the configuration method and the configuration patterns of the DMRSs of Embodiment 1. Hence, in this implementation, different from the preceding implementation, the distance between the two groups of OFDM symbols is greater than 5 OFDM symbols, which corresponds to the DMRS patterns in Embodiment 1. In another embodiment, the distance between the two groups of OFDM symbols may be less than 5 OFDM symbols; for example, the two groups of OFDM symbols are positioned within the same slot, and are space apart by one OFDM symbol.

According to other implementations of this embodiment of the present disclosure, besides the above-described method for configuring DMRSs, other methods for configuring DMRSs by lowering frequency domain densities or lowering time domain densities may also be used.

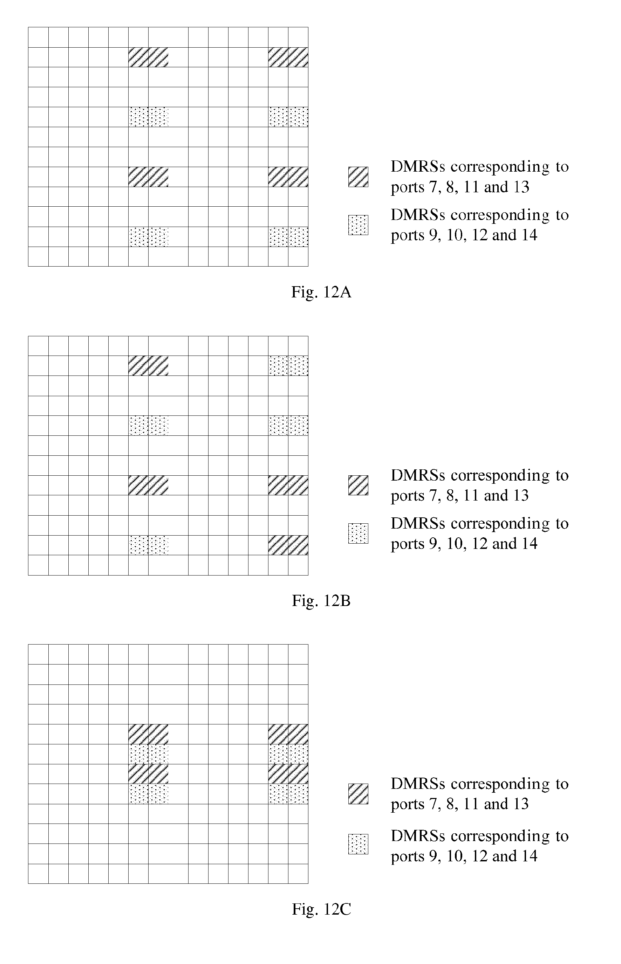

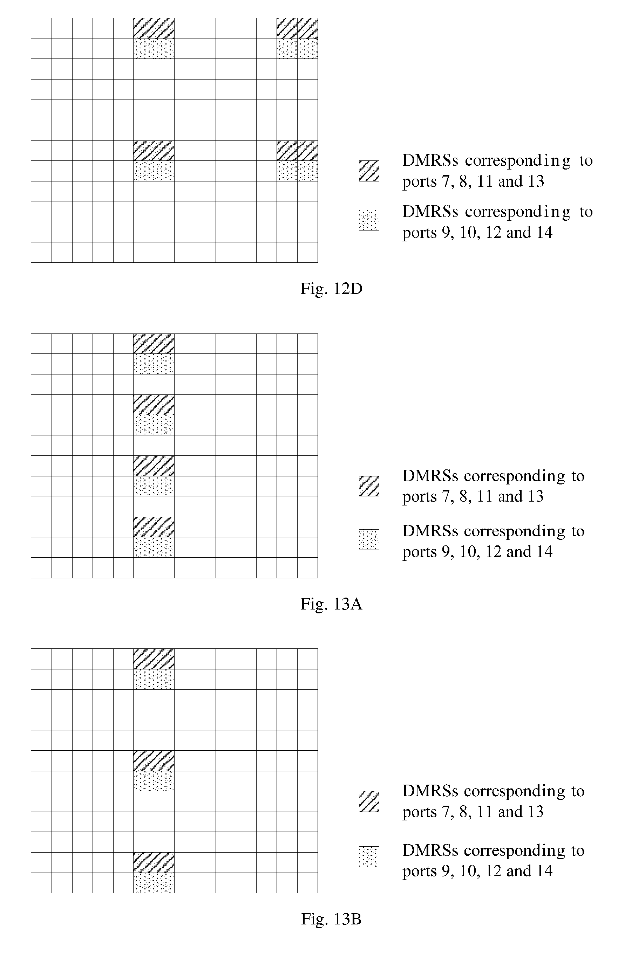

For example, frequency domain densities may be lowered to generate pilot patterns with lowered frequency domain densities shown in Figs. 12A-12D; wherein, in the patterns enumerated in Figs. 12A-12D, an order of the frequency domain serial numbers from small to large may be from the upper to the lower, and may be from the lower to the upper, which is not limited herein. And the patterns enumerated in Figs. 12A-12D are also based on the time domain positions of the existing configuration patterns of the DMRSs; however, this embodiment of the present disclosure is not limited thereto, and Figs. 12A-12D may also change the time domain positions based on the configuration patterns of the DMRSs of Embodiment 1.

For another example, time domain densities may be lowered to generate pilot patterns with lowered time domain densities shown in Figs. 13A-13B; wherein, in the patterns of DMRSs shown in Figs. 13A-13B, only two adjacent OFDM symbols in the time domain are occupied, and these two adjacent OFDM symbols are positioned in one slot of one PRB pair. Of course, this embodiment is not limited thereto, and these two adjacent OFDM symbols may also be positioned in two slots of one PRB pair. For example, each of the two slots has one OFDM symbol, but the two OFDM symbols are adjacent to each other; that is, the last OFDM symbol of the first slot is adjacent to the first OFDM symbol of the second slot.

In a typical application, small cell, of the NCT, the channel transmission environment may become good relative to a macro cell; for example, a signal to noise ratio will be higher, and temporal change of a channel is relatively slow, etc. In such a case, pilot densities in a unit of PRB pairs may be suitably lowered by using the method of this embodiment, and the number of REs carrying the UE data may be increased, thereby improving the transmission throughput.

Embodiment 4

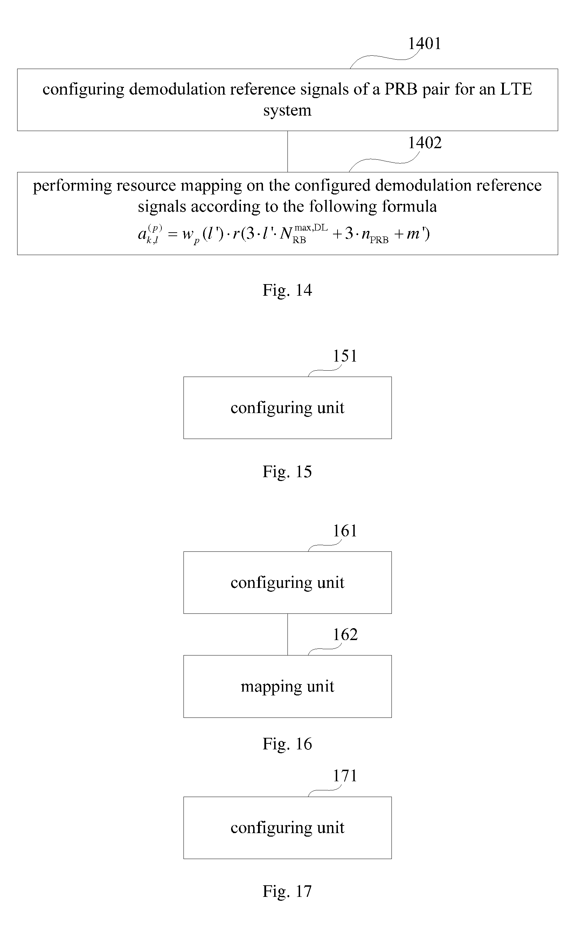

An embodiment of the present disclosure further provides a method for mapping demodulation reference signals. This method is based on the configuration of the DMRSs of Embodiment 3. configuring DMRSs according to the method of Embodiment 3, a DMRS sequence may be generated by using a method identical to an existing standard method; however, a method for mapping DMRSs is different from the existing standards. Fig. 14 is a flowchart of the method for mapping DMRSs of this embodiment. Referring to Fig. 14, the method includes:

step 1401: configuring demodulation reference signals of a PRB pair for an LTE system;

wherein, the demodulation reference signals may be configured by using the method of Embodiment 3, the contents of which being incorporated herein, which being not going to be described herein any further;

step 1402: performing resource mapping on the configured demodulation reference signals according to the following formula:

$$a_{k,l}^{(p)} = w_p(l') \cdot r(3 \cdot l' \cdot N_{RB}^{max,DL} + 3 \cdot n_{PRB} + m')$$

where, $w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases}$    $k = 5m' + N_{sc}^{RB} n_{PRB} + k'$    $k' = \begin{cases} 1 & p \in \{7,8,11,13\} \\ 0 & p \in \{9,10,12,14\} \end{cases}$

$l' = 0,1,2,3$ ;

where, values of $l$ are four integers, corresponding to $l'$ one by one, which is not limited herein.

The values of $l$ are as follows based on an existing standard: $l = \begin{cases} 5 & l'=0 \\ 6 & l'=1 \\ 5 & l'=2 \\ 6 & l'=3 \end{cases}$ .

The values of $l$ are as follows based on Embodiment 3: $l = \begin{cases} 0 & l'=0 \\ 1 & l'=1 \\ 5 & l'=2 \\ 6 & l'=3 \end{cases}$ , or $l = \begin{cases} 1 & l'=0 \\ 2 & l'=1 \\ 4 & l'=2 \\ 5 & l'=3 \end{cases}$ ,

or $l = \begin{cases} 1 & l'=0 \\ 2 & l'=1 \\ 5 & l'=2 \\ 6 & l'=3 \end{cases}$ , or $l = \begin{cases} 2 & l'=0 \\ 3 & l'=1 \\ 5 & l'=2 \\ 6 & l'=3 \end{cases}$ , or $l = \begin{cases} 3 & l'=0 \\ 4 & l'=1 \\ 5 & l'=2 \\ 6 & l'=3 \end{cases}$ ;

wherein, meanings of the parameters in the above formula are identical to those in Section 6.10.3 of 3GPP TS36.211, which shall not be described herein any further. For example, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence (refer to Section 6.10.3.1 of 3GPP TS36.211 for a detailed method of generation), $N_{RB}^{max,DL}$ is the number of RBs carried by a maximum downlink bandwidth (in an LTE system, this parameter is 110, refer to Section 6.2.1 of 3GPP TS36.211), $k$ is the frequency domain serial number of the RE where the DMRS is present, $l$ is the time domain serial number of the RE where the DMRS is present, k', m' and l' are intermediate variables, $w_p(i)$ is an orthogonal cover code sequence, $n_{PRB}$ is the serial number of the PRB pair where the DMRS is present, and $N_{sc}^{RB}$ is the number of the subcarriers contained in each PRB pair.

In the following formula, m' is a relative position of a subcarrier carrying the DMRS RE in one physical resource block.

Corresponding to Fig. 9A,

if the frequency domain serial numbers are in an ascending order from the upper to the lower,

m'= 0,1 ;

if the frequency domain serial numbers are in an descending order from the upper to the lower,

m'= 1,2.

Corresponding to Fig. 9B, m'= 0,2.

Corresponding to Fig. 9C,

if the frequency domain serial numbers are in an ascending order from the upper to the lower,

$m' = 1,2$;
if the frequency domain serial numbers are in an descending order from the upper to the lower,
$m' = 0,1$

Corresponding to Fig. 9D,
if the frequency domain serial numbers are in an ascending order from the upper to the lower,

$$m' = \begin{cases} 0,1 & \text{for port } 7,8,11,13 \\ 1,2 & \text{for port } 9,10,12,14 \end{cases};$$

if the frequency domain serial numbers are in an descending order from the upper to the lower,

$$m' = \begin{cases} 1,2 & \text{for port } 7,8,11,13 \\ 0,1 & \text{for port } 9,10,12,14 \end{cases}.$$

Corresponding to Fig. 9E,
if the frequency domain serial numbers are in an ascending order from the upper to the lower,

$$m' = \begin{cases} 1,2 & \text{for port } 7,8,11,13 \\ 0,1 & \text{for port } 9,10,12,14 \end{cases};$$

if the frequency domain serial numbers are in an descending order from the upper to the low-

er, $$m' = \begin{cases} 0,1 & \text{for port } 7,8,11,13 \\ 1,2 & \text{for port } 9,10,12,14 \end{cases}.$$

Corresponding to Fig. 10A,
if the frequency domain serial numbers are in an ascending order from the upper to the lower,

$$m' = \begin{cases} 1,2 & \text{if } l' = 0,1 \\ 0,1 & \text{if } l' = 2,3 \\ 0,1 & \text{if } l' = 0,1 \\ 1,2 & \text{if } l' = 2,3 \end{cases} \begin{array}{l} \text{for port } 7,8,11,13 \\ \\ \text{for port } 9,10,12,14 \end{array};$$

if the frequency domain serial numbers are in an descending order from the upper to the lower,

$$m' = \begin{cases} 0,1 & \text{if } l' = 0,1 \\ 1,2 & \text{if } l' = 2,3 \\ 1,2 & \text{if } l' = 0,1 \\ 0,1 & \text{if } l' = 2,3 \end{cases} \begin{array}{l} \text{for port } 7,8,11,13 \\ \\ \text{for port } 9,10,12,14 \end{array}.$$

Corresponding to Fig. 10B,
if the frequency domain serial numbers are in an ascending order from the upper to the lower,

$$m' = \begin{cases} 0,1 & \text{if } l' = 0,1 \\ 1,2 & \text{if } l' = 2,3 \\ 1,2 & \text{if } l' = 0,1 \\ 0,1 & \text{if } l' = 2,3 \end{cases} \begin{array}{l} \text{for port } 7,8,11,13 \\ \\ \text{for port } 9,10,12,14 \end{array};$$

if the frequency domain serial numbers are in an descending order from the upper to the lower,

$$m' = \begin{cases} 1,2 & \text{if } l' = 0,1 \\ 0,1 & \text{if } l' = 2,3 \\ 0,1 & \text{if } l' = 0,1 \\ 1,2 & \text{if } l' = 2,3 \end{cases} \begin{array}{l} \text{for port } 7,8,11,13 \\ \\ \text{for port } 9,10,12,14 \end{array}.$$

Corresponding to Fig. 10C,

if the frequency domain serial numbers are in an ascending order from the upper to the lower, $m' = \begin{cases} 1,2 & if\ l'=0,1 \\ 0,1 & if\ l'=2,3 \end{cases}$ ;

if the frequency domain serial numbers are in an descending order from the upper to the lower,

$$m' = \begin{cases} 0,1 & if\ l'=0,1 \\ 1,2 & if\ l'=2,3 \end{cases}.$$

Corresponding to Fig. 10D,

if the frequency domain serial numbers are in an ascending order from the upper to the lower, $m' = \begin{cases} 0,1 & if\ l'=0,1 \\ 1,2 & if\ l'=2,3 \end{cases}$ ;

if the frequency domain serial numbers are in an descending order from the upper to the lower,

$$m' = \begin{cases} 1,2 & if\ l'=0,1 \\ 0,1 & if\ l'=2,3 \end{cases}.$$

Corresponding to Fig. 11A, $m' = \begin{cases} 1 & if\ l'=0,1 \\ 0,2 & if\ l'=2,3 \end{cases}.$

Corresponding to Fig. 11B, $m' = \begin{cases} 0,2 & if\ l'=0,1 \\ 1 & if\ l'=2,3 \end{cases}.$

Corresponding to Fig. 11C $m' = \begin{cases} 1 & if\ l'=0,1 \\ 0,2 & if\ l'=2,3 \quad for\ port\ 7,8,11,13 \\ 0,2 & if\ l'=0,1 \\ 1 & if\ l'=2,3 \quad for\ port\ 9,10,12,14 \end{cases}.$

Corresponding to Fig. 11D, $m' = \begin{cases} 0,2 & if\ l'=0,1 \\ 1 & if\ l'=2,3 \quad for\ port\ 7,8,11,13 \\ 1 & if\ l'=0,1 \\ 0,2 & if\ l'=2,3 \quad for\ port\ 9,10,12,14 \end{cases}.$

In this embodiment, particular values of $w_p(i)$ are shown in the table below (this table comes from 3GPP TS36.211 Table 6.10.3.2-1):

| Antenna ports $p$ | $[\bar{w}_p(0)\ \bar{w}_p(1)\ \bar{w}_p(2)\ \bar{w}_p(3)]$ |
|---|---|
| 7 | [+1 +1 +1 +1] |
| 8 | [+1 -1 +1 -1] |
| 9 | [+1 +1 +1 +1] |
| 10 | [+1 -1 +1 -1] |
| 11 | [+1 +1 -1 -1] |
| 12 | [-1 -1 +1 +1] |
| 13 | [+1 -1 -1 +1] |
| 14 | [-1 +1 +1 -1] |

In order that the method for mapping of this embodiment to be more clear and easy to be understood, the port 8 is taken as an example below, assuming that the pilot sequences and sequences $w_p(i)$ at 24 positions in two PRB pairs are respectively denoted below:

Pilot sequences:

| a11 | a21 | a31 | a41 |
|-----|-----|-----|-----|
| a12 | a22 | a32 | a42 |
| a13 | a23 | a33 | a43 |
| a14 | a24 | a34 | a44 |
| a15 | a25 | a35 | a45 |
| a16 | a26 | a36 | a46 |

In this example, a11 and a12 correspond to letter A shown in Fig. 8, a31 and a41 correspond to letter B shown in Fig. 8, a12 and a22 correspond to letter C shown in Fig. 8, a32 and a42 correspond to letter D shown in Fig. 8, a13 and a23 correspond to letter E shown in Fig. 8, a33 and a43 correspond to letter F shown in Fig. 8, and so on. Furthermore, the former three lines in the table correspond to one PRB pair, and the latter three lines in the table correspond to another PRB pair.

Sequences $w_p(i)$:

| +1 | -1 | +1 | -1 |
|----|----|----|----|

| -1 | +1 | -1 | +1 |
|----|----|----|----|
| +1 | -1 | +1 | -1 |
| -1 | +1 | -1 | +1 |
| +1 | -1 | +1 | -1 |
| -1 | +1 | -1 | +1 |

In this example, the sequences $w_p(i)$ correspond to the pilot sequences one by one, which shall not be described herein any further.

According to the method of this embodiment, after the DMRSs are configured according to the patterns shown in Fig. 10A, the pilot sequences and spreading codes at 16 positions in the RB resource are respectively denoted below:

Pilot sequences:

|     |     | a31 | a41 |
|-----|-----|-----|-----|
| a12 | a22 | a32 | a42 |
| a13 | a23 |     |     |
|     |     | a34 | a44 |
| a15 | a25 | a35 | a45 |
| a16 | a26 |     |     |

Sequences $w_p(i)$ :

|     |     | +1 | -1 |
|-----|-----|----|----|
| -1  | +1  | -1 | +1 |
| +1  | -1  |    |    |

(continued)

| | | -1 | +1 |
|----|----|----|----|
| +1 | -1 | +1 | -1 |
| -1 | +1 | | |

As shown above, after configuring the DMRSs according to the method of Embodiment 3, generating the DMRSs by using the existing method for generating pilot sequences and mapping the DMRSs according to the method for mapping of this embodiment, the REs at emptied positions may be used for data transmission.

By configuring DMRSs by using the method of Embodiment 3 and mapping DMRSs by using the method of this embodiment, data throughput in advanced releases of LTE (Release 12 or higher) may be improved.

An embodiment of the present disclosure further provides an eNB, as described in Embodiment 5 below. As the principle of the eNB for solving problems is similar to that of the method in Embodiment 1, the implementation of the method in Embodiment 1 may be referred to for the implementation of the eNB, and repeated parts shall not be described herein any further.

Embodiment 5

An embodiment of the present disclosure further provides an eNB for configuring DMRSs. Fig. 15 is a schematic diagram of the structure of the eNB. Referring to Fig. 15, the eNB includes:

a configuring unit 151 configured to configure DMRSs being carried by four OFDM symbols in one PRB pair; wherein the four OFDM symbols are divided into two groups, each group consisting of two adjacent OFDM symbols, and the distance between the two groups of OFDM symbols being greater than five OFDM symbols.

In an embodiment, the positions of the two groups of OFDM symbols are symmetrical relative to a boundary of two slots constituting the PRB pair.

In an implementation, the first group of OFDM symbols are former two OFDM symbols of the first slot, and the second group of OFDM symbols are latter two OFDM symbols of the second slot.

In another implementation, the first group of OFDM symbols are the second and third OFDM symbols of the first slot, and the second group of OFDM symbols are the fifth and sixth OFDM symbols of the second slot.

In another embodiment, the positions of the two groups of OFDM symbols are asymmetrical relative to the boundary of the two slots constituting the PRB pair.

In an implementation, the first group of OFDM symbols are the second and third OFDM symbols of the first slot, and the second group of OFDM symbols are the latter two OFDM symbols of the second slot.

In another implementation, the first group of OFDM symbols are the third and fourth OFDM symbols of the first slot, and the second group of OFDM symbols are the latter two OFDM symbols of the second slot.

In a further implementation, the first group of OFDM symbols are the fourth and fifth OFDM symbols of the first slot, and the second group of OFDM symbols are the latter two OFDM symbols of the second slot.

In this embodiment, the DMRSs corresponding to one or more ports occupy the first, sixth and eleventh resource elements (REs) in a frequency domain by using a code division scheme, or the DMRSs corresponding to one or more ports occupy the second, seventh and twelfth REs in the frequency domain by using the code division scheme.

By configuring DMRSs by using the eNB of this embodiment, performance of channel estimation based on DMRSs in advanced releases of LTE (Release 12 or higher) may be improved.

An embodiment of the present disclosure further provides an eNB, as described in Embodiment 6 below. As the principle of the eNB for solving problems is similar to that of the method in Embodiment 2, the implementation of the method in Embodiment 2 may be referred to for the implementation of the eNB, and repeated parts shall not be described herein any further.

Embodiment 6

An embodiment of the present disclosure further provides an eNB for mapping DMRSs. Fig. 16 is a schematic diagram of the structure of the eNB. Referring to Fig. 16, the eNB includes:

a configuring unit 161 configured to configure demodulation reference signals of a PRB pair for an LTE system according to the method for configuring demodulation reference signals as described in Embodiment 1; and

a mapping unit 162 configured to perform resource mapping on the configured demodulation reference signals according to the following formula:

$$a_{k,l}^{(p)} = w_p(l') \cdot r(3 \cdot l' \cdot N_{RB}^{\max.DL} + 3 \cdot n_{PRB} + m') \; ;$$

where,
$$w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases}$$
$$k = 5m' + N_{sc}^{RB} n_{PRB} + k'$$

$$k' = \begin{cases} 1 & p \in \{7,8,11,13\} \\ 0 & p \in \{9,10,12,14\} \end{cases} \; ;$$

$m'=0,1,2$

$l'=0,1,2,3$

where, values of $l$ are four integers, corresponding to $l'$ one by one; and in this embodiment,
$$l = \begin{cases} 0 & l'=0 \\ 1 & l'=1 \\ 5 & l'=2 \\ 6 & l'=3 \end{cases},$$

or
$$l = \begin{cases} 1 & l'=0 \\ 2 & l'=1 \\ 4 & l'=2 \\ 5 & l'=3 \end{cases},$$
or
$$l = \begin{cases} 1 & l'=0 \\ 2 & l'=1 \\ 5 & l'=2 \\ 6 & l'=3 \end{cases},$$
or
$$l = \begin{cases} 2 & l'=0 \\ 3 & l'=1 \\ 5 & l'=2 \\ 6 & l'=3 \end{cases},$$
or
$$l = \begin{cases} 3 & l'=0 \\ 4 & l'=1 \\ 5 & l'=2 \\ 6 & l'=3 \end{cases};$$

wherein, meanings of the parameters are identical to those in Section 6.10.3 of 3GPP TS36.211, which shall not be described herein any further.

By mapping DMRSs by using the eNB of this embodiment, performance of channel estimation based on DMRSs in advanced releases of LTE (Release 12 or higher) may be improved.

An embodiment of the present disclosure further provides an eNB, as described in Embodiment 7 below. As the principle of the eNB for solving problems is similar to that of the method in Embodiment 3, the implementation of the method in Embodiment 3 may be referred to for the implementation of the eNB, and repeated parts shall not be described herein any further.

Embodiment 7

An embodiment of the present disclosure further provides an eNB for configuring DMRSs. Fig. 17 is a schematic diagram of the structure of the eNB. Referring to Fig. 17, the eNB includes:

a configuring unit 171 configured to configure less than six groups of DMRSs in each PRB pair, wherein each group of DMRSs consists of two REs carrying the DMRSs, the two REs carrying the DMRSs being positioned in the same subcarrier and occupying two adjacent OFDM symbols;
wherein, the DMRSs corresponding to one or more ports occupy the first, sixth and/or eleventh REs in a frequency domain by using a code division scheme, or the DMRSs corresponding to one or more ports occupy the second, seventh and/or twelfth REs in a frequency domain by using a code division scheme.

In an embodiment, if four groups of DMRSs are configured in each PRB pair, the configuring unit 171 is configured to: keep the densities and positions of the four groups of DMRSs in the time domain constant, and configure the four groups of DMRSs at any two groups of three groups of positions in a frequency domain.

In another embodiment, if four groups of DMRSs are configured in each PRB pair, the configuring unit 171 is configured to: keep the densities and positions of the four groups of DMRSs in the time domain constant, configure two groups of the four groups of DMRSs at an intermediate group of three groups of positions in a frequency domain, and configure the other two groups of the four groups of DMRSs at the first and third groups of three groups of positions in a frequency domain, and the DMRSs configured at the first group of positions and the DMRSs configured at the third group of positions are positioned at different slots of the PRB pair.

In a further embodiment, if three groups of DMRSs are configured in each PRB pair, the configuring unit 171 is configured to: keep the densities and positions of the three groups of DMRSs in the time domain constant, configure the three groups of DMRSs respectively on three groups of positions in a frequency domain, and the DMRSs configured at the first group of positions and the DMRSs configured at the third group of positions are positioned at the same slot of the PRB pair, the DMRSs configured at the second group of positions and the DMRSs configured at the first and third groups of positions are positioned at different slots of the PRB pair.

In this embodiment, four OFDM symbols are used to carry DMRSs in one PRB pair, and wherein the four OFDM symbols are divided into two groups, each group consisting of two adjacent OFDM symbols.

In another embodiment, the DMRSs may be configured as the pilot patterns with lowered frequency domain densities shown in Figs. 12A-12D, or as the pilot patterns with lowered time domain densities shown in Figs. 13A-13B.

By configuring DMRSs by using the eNB of this embodiment, performance of channel estimation based on DMRSs in advanced releases of LTE (Release 12 or higher) may be improved.

Embodiment 8

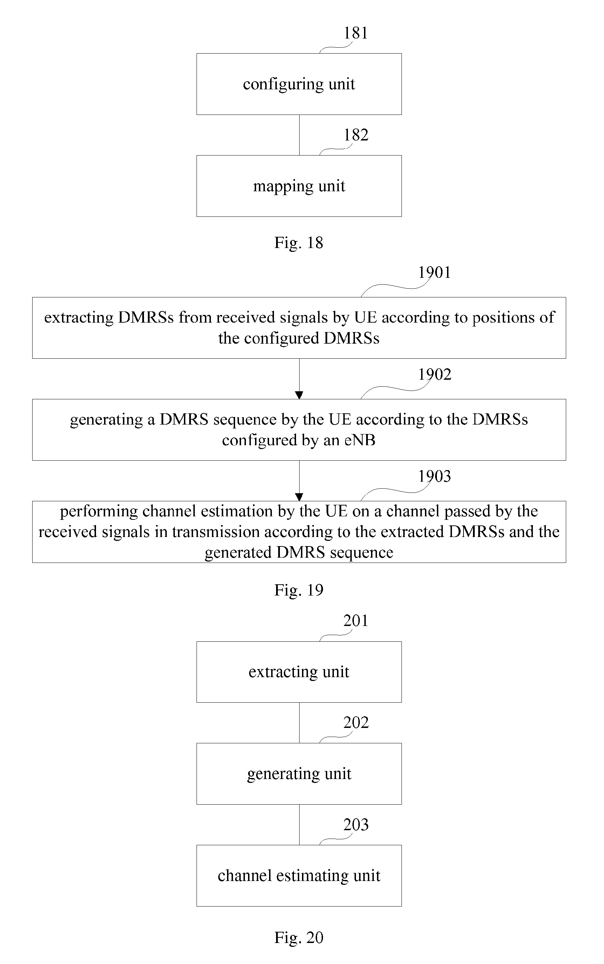

An embodiment of the present disclosure further provides an eNB for mapping DMRSs. Fig. 18 is a schematic diagram of the structure of the eNB. Referring to Fig. 18, the eNB includes:

a configuring unit 181 configured to configure demodulation reference signals of a PRB pair for an LTE system according to the method for configuring demodulation reference signals as described in Embodiment 3 ; and
a mapping unit 182 configured to perform resource mapping on the configured demodulation reference signals according to the following formula:

$$a_{k,l}^{(p)} = w_p(l') \cdot r(3 \cdot l' \cdot N_{RB}^{max,DL} + 3 \cdot n_{PRB} + m')$$

$$w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases} \quad k = 5m' + N_{sc}^{RB} n_{PRB} + k' \quad k' = \begin{cases} 1 & p \in \{7,8,11,13\} \\ 0 & p \in \{9,10,12,14\} \end{cases} \quad l' = 0,1,2,3 ;$$

where, values of $l$ are four integers, corresponding to $l'$ one by one. $l = \begin{cases} 5 & l'=0 \\ 6 & l'=1 \\ 5 & l'=2 \\ 6 & l'=3 \end{cases}$ based on an existing standard,

and $l = \begin{cases} 0 & l'=0 \\ 1 & l'=1 \\ 5 & l'=2 \\ 6 & l'=3 \end{cases}$, or $l = \begin{cases} 1 & l'=0 \\ 2 & l'=1 \\ 4 & l'=2 \\ 5 & l'=3 \end{cases}$, or $l = \begin{cases} 1 & l'=0 \\ 2 & l'=1 \\ 5 & l'=2 \\ 6 & l'=3 \end{cases}$, or $l = \begin{cases} 2 & l'=0 \\ 3 & l'=1 \\ 5 & l'=2 \\ 6 & l'=3 \end{cases}$, or $l = \begin{cases} 3 & l'=0 \\ 4 & l'=1 \\ 5 & l'=2 \\ 6 & l'=3 \end{cases}$ based on

Embodiment 3. In this embodiment, meanings of the parameters are identical to those in Section 6.10.3 of 3GPP TS36.211, which shall not be described herein any further;
where, the values of $m$ are as follows:

Corresponding to Fig. 9A,
if the frequency domain serial numbers are in an ascending order from the upper to the lower,
$m'=0,1$;
if the frequency domain serial numbers are in an descending order from the upper to the lower,
$m'=1,2$.

Corresponding to Fig. 9B, $m'=0,2$.
Corresponding to Fig. 9C,
if the frequency domain serial numbers are in an ascending order from the upper to the lower,

$m'$=1,2;
if the frequency domain serial numbers are in an descending order from the upper to the lower,
$m'$=0,1.

Corresponding to Fig. 9D,
if the frequency domain serial numbers are in an ascending order from the upper to the lower,

$$m' = \begin{cases} 0,1 & \text{for port } 7,8,11,13 \\ 1,2 & \text{for port } 9,10,12,14 \end{cases};$$

if the frequency domain serial numbers are in an descending order from the upper to the lower,

$$m' = \begin{cases} 1,2 & \text{for port } 7,8,11,13 \\ 0,1 & \text{for port } 9,10,12,14 \end{cases}.$$

Corresponding to Fig. 9E,
if the frequency domain serial numbers are in an ascending order from the upper to the lower,

$$m' = \begin{cases} 1,2 & \text{for port } 7,8,11,13 \\ 0,1 & \text{for port } 9,10,12,14 \end{cases};\;;$$

if the frequency domain serial numbers are in an descending order from the upper to the lower,

$$m' = \begin{cases} 0,1 & \text{for port } 7,8,11,13 \\ 1,2 & \text{for port } 9,10,12,14 \end{cases}.$$

Corresponding to Fig. 10A,
if the frequency domain serial numbers are in an ascending order from the upper to the lower,

$$m' = \begin{cases} 1,2 & \text{if } l'=0,1 \\ 0,1 & \text{if } l'=2,3 \end{cases} \text{for port } 7,8,11,13 \\ \begin{cases} 0,1 & \text{if } l'=0,1 \\ 1,2 & \text{if } l'=2,3 \end{cases} \text{for port } 9,10,12,14 ;$$

if the frequency domain serial numbers are in an descending order from the upper to the lower,

$$m' = \begin{cases} 0,1 & \text{if } l'=0,1 \\ 1,2 & \text{if } l'=2,3 \end{cases} \text{for port } 7,8,11,13 \\ \begin{cases} 1,2 & \text{if } l'=0,1 \\ 0,1 & \text{if } l'=2,3 \end{cases} \text{for port } 9,10,12,14 .$$

Corresponding to Fig. 10B,
if the frequency domain serial numbers are in an ascending order from the upper to the lower,

$$m' = \begin{cases} 0,1 & \text{if } l'=0,1 \\ 1,2 & \text{if } l'=2,3 \end{cases} \text{for port } 7,8,11,13 \\ \begin{cases} 1,2 & \text{if } l'=0,1 \\ 0,1 & \text{if } l'=2,3 \end{cases} \text{for port } 9,10,12,14 ;$$

if the frequency domain serial numbers are in an descending order from the upper to the low-

$$er, \; m' = \begin{cases} 1,2 & if \; l' = 0,1 \\ 0,1 & if \; l' = 2,3 \end{cases} for \; port \; 7,8,11,13 \\ \begin{cases} 0,1 & if \; l' = 0,1 \\ 1,2 & if \; l' = 2,3 \end{cases} for \; port \; 9,10,12,14$$

Corresponding to Fig. 10C,

if the frequency domain serial numbers are in an ascending order from the upper to the lower,

$$m' = \begin{cases} 1,2 & if \; l' = 0,1 \\ 0,1 & if \; l' = 2,3 \end{cases};$$

if the frequency domain serial numbers are in an descending order from the upper to the lower,

$$m' = \begin{cases} 0,1 & if \; l' = 0,1 \\ 1,2 & if \; l' = 2,3 \end{cases}.$$

Corresponding to Fig. 10D,

if the frequency domain serial numbers are in an ascending order from the upper to the lower,

$$m' = \begin{cases} 0,1 & if \; l' = 0,1 \\ 1,2 & if \; l' = 2,3 \end{cases};$$

if the frequency domain serial numbers are in an descending order from the upper to the lower,

$$m' = \begin{cases} 1,2 & if \; l' = 0,1 \\ 0,1 & if \; l' = 2,3 \end{cases}.$$

Corresponding to Fig. 11A, $m' = \begin{cases} 1 & if \; l' = 0,1 \\ 0,2 & if \; l' = 2,3 \end{cases}.$

Corresponding to Fig. 11B, $m' = \begin{cases} 0,2 & if \; l' = 0,1 \\ 1 & if \; l' = 2,3 \end{cases}.$

Corresponding to Fig. 11C, $m' = \begin{cases} 1 & if \; l' = 0,1 \\ 0,2 & if \; l' = 2,3 \end{cases} for \; port \; 7,8,11,13 \\ \begin{cases} 0,2 & if \; l' = 0,1 \\ 1 & if \; l' = 2,3 \end{cases} for \; port \; 9,10,12,14.$

Corresponding to Fig. 11D, $m' = \begin{cases} 0,2 & if \; l' = 0,1 \\ 1 & if \; l' = 2,3 \end{cases} for \; port \; 7,8,11,13 \\ \begin{cases} 1 & if \; l' = 0,1 \\ 0,2 & if \; l' = 2,3 \end{cases} for \; port \; 9,10,12,14.$

By mapping DMRSs by using the eNB of this embodiment, data throughput in advanced releases of LTE (Release 12 or higher) may be improved.

Embodiment 9

An embodiment of the present disclosure further provides a method for performing channel estimation. Fig. 19 is a flowchart of the method. Referring to Fig. 19, the method includes:

step 1901: extracting DMRSs from received signals by UE according to positions of DMRSs configured in accordance with the method as described in Embodiment 1 or Embodiment 3;

in an embodiment, the DMRSs are transmitted after being configured by an eNB according to the method of Embodiment 1 and mapped by the eNB to positions of corresponding physical resource block pairs according to the method of Embodiment 2; in another embodiment, the DMRSs are transmitted after being configured by an eNB according to the method of Embodiment 3 and mapped by the eNB to positions of corresponding physical resource block pairs according to a method of an existing standard or the method of Embodiment 4; hence, the UE may extract the DMRSs of its own at corresponding positions;

step 1902: generating a DMRS sequence by the UE according to the DMRSs configured by an eNB;

wherein, the UE may generate the DMRS sequence according to a method of an existing standard, which shall not be described herein any further;

step 1903: performing channel estimation by the UE on a channel passed by the received signals in transmission according to the extracted DMRSs and the generated DMRS sequence;

wherein, the UE may perform channel estimation on the channel passed by the received signals in transmission by using the received DMRSs and the locally generated DMRS sequence; a particular method for performing channel estimation is not limited in this embodiment, and an LS algorithm, an MMSE algorithm, a DFT algorithm, or various interpolation algorithms, may be employed.

With the method of this embodiment, performance of channel estimation may be improved.

An embodiment of the present disclosure further provides UE, as described in Embodiment 10 below. As the principle of the UE for solving problems is similar to that of the method in Embodiment 9, the implementation of the method in Embodiment 9 may be referred to for the implementation of the UE, and repeated parts shall not be described herein any further.

Embodiment 10

An embodiment of the present disclosure further provides UE. Fig. 20 is a schematic diagram of the structure of the UE. Referring to Fig. 20, the UE includes:

an extracting unit 201 configured to extract DMRSs from received signals according to positions of DMRSs configured in accordance with Embodiment 1 or Embodiment 3;

a generating unit 202 configured to generate a DMRS sequence according to the DMRSs configured by an eNB; and

a channel estimating unit 203 configured to perform channel estimation on a channel passed by the received signals in transmission according to the extracted DMRSs and the generated DMRS sequence.

With the UE of this embodiment, performance of channel estimation may be improved.

An embodiment of the present disclosure further provides a communication system, including the eNB as described in embodiments 5-8 and the UE as described in Embodiment 10.

An embodiment of the present disclosure further provides a computer-readable program, wherein when the program is executed in an eNB, the program enables a computer to carry out the method for configuring demodulation reference signals as described in embodiments 1 and 3 or the method for mapping demodulation reference signals as described in embodiments 2 and 4 in the eNB.

An embodiment of the present disclosure further provides a storage medium in which a computer-readable program is stored, wherein the computer-readable program enables a computer to carry out the method for configuring demodulation reference signals as described in embodiments 1 and 3 or the method for mapping demodulation reference signals as described in embodiments 2 and 4 in an eNB.

An embodiment of the present disclosure further provides a computer-readable program, wherein when the program is executed in terminal equipment, the program enables a computer to carry out the method for performing channel estimation as described in Embodiment 9 in the terminal equipment.

An embodiment of the present disclosure further provides a storage medium in which a computer-readable program is stored, wherein the computer-readable program enables a computer to carry out the method for performing channel estimation as described in Embodiment 9 in terminal equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. A method for configuring demodulation reference signals, comprising:

   configuring demodulation reference signals (DMRSs) being carried by four orthogonal frequency division multiplexing (OFDM) symbols in one physical resource block (PRB) pair;
   wherein the four OFDM symbols are divided into two groups, each group consisting of two adjacent OFDM symbols, and the distance between the two groups of OFDM symbols being greater than five OFDM symbols.

2. The method according to claim 1, wherein the positions of the two groups of OFDM symbols are symmetrical relative to a boundary of two slots constituting the one PRB pair.

3. The method according to claim 2, wherein the first group of OFDM symbols are former two OFDM symbols of the first slot, and the second group of OFDM symbols are latter two OFDM symbols of the second slot.

4. The method according to claim 2, wherein the first group of OFDM symbols are the second and third OFDM symbols of the first slot, and the second group of OFDM symbols are the fifth and sixth OFDM symbols of the second slot.

5. The method according to claim 1, wherein the positions of the two groups of OFDM symbols are asymmetrical relative to the boundary of the two slots constituting the one PRB pair.

6. The method according to claim 5, wherein the first group of OFDM symbols are the second and third OFDM symbols of the first slot, and the second group of OFDM symbols are the latter two OFDM symbols of the second slot.

7. The method according to claim 5, wherein the first group of OFDM symbols are the third and fourth OFDM symbols of the first slot, and the second group of OFDM symbols are the latter two OFDM symbols of the second slot.

8. The method according to claim 5, wherein the first group of OFDM symbols are the fourth and fifth OFDM symbols of the first slot, and the second group of OFDM symbols are the latter two OFDM symbols of the second slot.

9. The method according to any one of claims 2-8, wherein the DMRSs corresponding to one or more ports occupy the first, sixth and eleventh resource elements (REs) in a frequency domain by using a code division scheme, or the DMRSs corresponding to one or more ports occupy the second, seventh and twelfth REs in a frequency domain by using a code division scheme.

10. A method for mapping demodulation reference signals, comprising:

    configuring demodulation reference signals of a PRB pair for an LTE system according to the method for configuring demodulation reference signals as claimed in any one of claims 1-9; and
    performing resource mapping on the configured demodulation reference signals according to the following formula:

$$a_{k,l}^{(p)} = w_p(l') \cdot r(3 \cdot l' \cdot N_{RB}^{\max, DL} + 3 \cdot n_{PRB} + m') \; ;$$

where, $\quad w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases} \qquad k = 5m' + N_{sc}^{RB} n_{PRB} + k'$

$$k' = \begin{cases} 1 & p \in \{7,8,11,13\} \\ 0 & p \in \{9,10,12,14\} \end{cases} \; ;$$

*m'*=0,1,2

*l'*=0,1,2,3

and where, $a_{k,l}^{(p)}$ is a modulation symbol of a port *p* carried in an RE with a time domain serial number *l* and a frequency domain serial number *k*, *r* is a DMRS modulation symbol sequence generated according to a pseudo-random sequence, $N_{RB}^{\max,DL}$ is the number of RBs carried by a maximum downlink bandwidth, $w_p(i)$ is an orthogonal cover code sequence, $N_{sc}^{RB}$ is the number of the subcarriers contained in each PRB pair, $n_{PRB}$ is the serial number of the PRB pair where the DMRS is present, *p* is the number of the ports, *l'*, *k'* and *m'* are intermediate variables, and *l* is the time domain serial number of the RE where the DMRS is present,

$$l = \begin{cases} 0 & l'=0 \\ 1 & l'=1 \\ 5 & l'=2 \\ 6 & l'=3 \end{cases}, \text{ or } l = \begin{cases} 1 & l'=0 \\ 2 & l'=1 \\ 4 & l'=2 \\ 5 & l'=3 \end{cases}, \text{ or } l = \begin{cases} 1 & l'=0 \\ 2 & l'=1 \\ 5 & l'=2 \\ 6 & l'=3 \end{cases}, \text{ or } l = \begin{cases} 2 & l'=0 \\ 3 & l'=1 \\ 5 & l'=2 \\ 6 & l'=3 \end{cases}, \text{ or }$$

$$l = \begin{cases} 3 & l'=0 \\ 4 & l'=1 \\ 5 & l'=2 \\ 6 & l'=3 \end{cases}.$$

11. A method for configuring demodulation reference signals, comprising:

configuring less than six groups of DMRSs in each PRB pair;
wherein each group of DMRSs consists of two REs carrying the DMRSs, the two REs carrying the DMRSs being positioned in the same subcarrier and occupying two adjacent OFDM symbols.

12. The method according to claim 11, wherein,
the DMRSs corresponding to one or more ports occupy the first, sixth and/or eleventh REs in a frequency domain by using a code division scheme, or the DMRSs corresponding to one or more ports occupy the second, seventh and/or twelfth REs in a frequency domain by using a code division scheme.

13. The method according to claim 12, wherein if four groups of DMRSs are configured in each PRB pair, the method comprises:

keeping the densities and positions of the four groups of DMRSs in the time domain constant, and configuring the four groups of DMRSs at any two groups of three groups of positions in a frequency domain.

14. The method according to claim 12, wherein if four groups of DMRSs are configured in each PRB pair, the method comprises:

keeping the densities and positions of the four groups of DMRSs in the time domain constant, configuring two groups of the four groups of DMRSs at an intermediate group of three groups of positions in a frequency domain, and configuring the other two groups of the four groups of DMRSs at the first and third groups of the three groups of positions in a frequency domain, with the DMRSs configured at the first group of positions and the DMRSs configured at the third group of positions being positioned at different slots of the PRB pair.

15. The method according to claim 12, wherein if three groups of DMRSs are configured in each PRB pair, the method comprises:

keeping the densities and positions of the three groups of DMRSs in the time domain constant, configuring the three groups of DMRSs respectively on three groups of positions in a frequency domain, with the DMRSs configured at the first group of positions and the DMRSs configured at the third group of positions being positioned at the same slot of the PRB pair, and the DMRSs configured at the second group of positions and the DMRSs configured at the first and third groups of positions being positioned at different slots of the PRB pair.

**16.** The method according to any one of claims 11-15, wherein four OFDM symbols are used to carry DMRSs in one PRB pair; and wherein the four OFDM symbols are divided into two groups, each group consisting of two adjacent OFDM symbols.

**17.** A method for mapping demodulation reference signals, comprising:

configuring demodulation reference signals of a PRB pair for an LTE system according to the method for configuring demodulation reference signals as claimed in any one of claims 11-16; and
performing resource mapping on the configured demodulation reference signals according to the following formula:

$$a_{k,l}^{(p)} = w_p(l') \cdot r(3 \cdot l' \cdot N_{RB}^{max,DL} + 3 \cdot n_{PRB} + m')$$

where, $w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases}$

$k = 5m' + N_{sc}^{RB} n_{PRB} + k'$     $k' = \begin{cases} 1 & p \in \{7,8,11,13\} \\ 0 & p \in \{9,10,12,14\} \end{cases}$

$l' = 0,1,2,3$;

and where, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence, $N_{RB}^{max,DL}$ is the number of RBs carried by a maximum downlink bandwidth, $w_p(i)$ is an orthogonal cover code sequence, $N_{sc}^{RB}$ is the number of the subcarriers contained in each PRB pair, $n_{PRB}$ is the serial number of the PRB pair where the DMRS is present, $p$ is the number of the ports, l', k' and m' are intermediate variables;

where,

$m'=0,1$, or

$m'=1,2$, or

$m'=0,2$,   or   $m' = \begin{cases} 0,1 & \text{for port } 7,8,11,13 \\ 1,2 & \text{for port } 9,10,12,14 \end{cases}$,   or   $m' = \begin{cases} 1,2 & \text{for port } 7,8,11,13 \\ 0,1 & \text{for port } 9,10,12,14 \end{cases}$,   or

$m' = \begin{cases} 1,2 & \text{if } l'=0,1 \\ 0,1 & \text{if } l'=2,3 \\ 0,1 & \text{if } l'=0,1 \\ 1,2 & \text{if } l'=2,3 \end{cases} \begin{array}{l} \text{for port } 7,8,11,13 \\ \\ \text{for port } 9,10,12,14 \end{array}$,   or   $m' = \begin{cases} 0,1 & \text{if } l'=0,1 \\ 1,2 & \text{if } l'=2,3 \\ 1,2 & \text{if } l'=0,1 \\ 0,1 & \text{if } l'=2,3 \end{cases} \begin{array}{l} \text{for port } 7,8,11,13 \\ \\ \text{for port } 9,10,12,14 \end{array}$,

or   $m' = \begin{cases} 1,2 & \text{if } l'=0,1 \\ 0,1 & \text{if } l'=2,3 \end{cases}$,   or   $m' = \begin{cases} 0,1 & \text{if } l'=0,1 \\ 1,2 & \text{if } l'=2,3 \end{cases}$,   or   $m' = \begin{cases} 1 & \text{if } l'=0,1 \\ 0,2 & \text{if } l'=2,3 \end{cases}$,   or

$m' = \begin{cases} 0,2 & \text{if } l'=0,1 \\ 1 & \text{if } l'=2,3 \end{cases}$,   or   $m' = \begin{cases} 1 & \text{if } l'=0,1 \\ 0,2 & \text{if } l'=2,3 \\ 0,2 & \text{if } l'=0,1 \\ 1 & \text{if } l'=2,3 \end{cases} \begin{array}{l} \text{for port } 7,8,11,13 \\ \\ \text{for port } 9,10,12,14 \end{array}$,   or

$$m' = \begin{cases} 0,2 & \text{if } l' = 0,1 \\ 1 & \text{if } l' = 2,3 \end{cases} \quad \text{for port } 7,8,11,13 \\ \begin{cases} 1 & \text{if } l' = 0,1 \\ 0,2 & \text{if } l' = 2,3 \end{cases} \quad \text{for port } 9,10,12,14 \end{cases}.$$

18. An eNB, applicable to configuring DMRSs, wherein the eNB comprises:

   a configuring unit configured to configure DMRSs being carried by four OFDM symbols in one PRB pair; wherein the four OFDM symbols are divided into two groups, each group consisting of two adjacent OFDM symbols, and the distance between the two groups of OFDM symbols being greater than five OFDM symbols.

19. The eNB according to claim 18, wherein the positions of the two groups of OFDM symbols are symmetrical relative to a boundary of two slots constituting the one PRB pair.

20. The eNB according to claim 19, wherein the first group of OFDM symbols are former two OFDM symbols of the first slot, and the second group of OFDM symbols are latter two OFDM symbols of the second slot.

21. The eNB according to claim 19, wherein the first group of OFDM symbols are the second and third OFDM symbols of the first slot, and the second group of OFDM symbols are the fifth and sixth OFDM symbols of the second slot.

22. The eNB according to claim 18, wherein the positions of the two groups of OFDM symbols are asymmetrical relative to the boundary of the two slots constituting the one PRB pair.

23. The eNB according to claim 22, wherein the first group of OFDM symbols are the second and third OFDM symbols of the first slot, and the second group of OFDM symbols are the latter two OFDM symbols of the second slot.

24. The eNB according to claim 22, wherein the first group of OFDM symbols are the third and fourth OFDM symbols of the first slot, and the second group of OFDM symbols are the latter two OFDM symbols of the second slot.

25. The eNB according to claim 22, wherein the first group of OFDM symbols are the fourth and fifth OFDM symbols of the first slot, and the second group of OFDM symbols are the latter two OFDM symbols of the second slot.

26. The eNB according to any one of claims 18-25, wherein the DMRSs corresponding to one or more ports occupy the first, sixth and eleventh resource elements (REs) in a frequency domain by using a code division scheme, or the DMRSs corresponding to one or more ports occupy the second, seventh and twelfth REs in a frequency domain by using a code division scheme.

27. An eNB, applicable to mapping DMRSs, wherein the eNB comprises:

   a configuring unit configured to configure demodulation reference signals of a PRB pair for an LTE system according to the method for configuring demodulation reference signals as claimed in any one of claims 1-9; and a mapping unit configured to perform resource mapping on the configured demodulation reference signals according to the following formula:

$$a_{k,l}^{(p)} = w_p(l') \cdot r(3 \cdot l' \cdot N_{RB}^{\max,DL} + 3 \cdot n_{PRB} + m');$$

$$w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases} \qquad k = 5m' + N_{sc}^{RB} n_{PRB} + k'$$

$$k' = \begin{cases} 1 & p \in \{7,8,11,13\} \\ 0 & p \in \{9,10,12,14\} \end{cases};\;;$$

$$m' = 0,1,2$$

*l*=0,1,2,3

where, $a_{k,l}^{(p)}$ is a modulation symbol of a port *p* carried in an RE with a time domain serial number *l* and a frequency domain serial number *k*, *r* is a DMRS modulation symbol sequence generated according to a pseudo-random sequence, $N_{RB}^{max,DL}$ is the number of RBs carried by a maximum downlink bandwidth, $w_p(i)$ is an orthogonal cover code sequence, $N_{sc}^{RB}$ is the number of the subcarries contained in each PRB pair, $n_{PRB}$ is the serial number of the PRB pair where the DMRS is present, *p* is the number of the ports, 1', k' and m' are intermediate variables, and *l* is the time domain serial number of the RE where the DMRS is present,

$$l = \begin{cases} 0 & l'=0 \\ 1 & l'=1 \\ 5 & l'=2 \\ 6 & l'=3 \end{cases}, \text{ or } l = \begin{cases} 1 & l'=0 \\ 2 & l'=1 \\ 4 & l'=2 \\ 5 & l'=3 \end{cases}, \text{ or } l = \begin{cases} 1 & l'=0 \\ 2 & l'=1 \\ 5 & l'=2 \\ 6 & l'=3 \end{cases}, \text{ or } l = \begin{cases} 2 & l'=0 \\ 3 & l'=1 \\ 5 & l'=2 \\ 6 & l'=3 \end{cases}, \text{ or } l = \begin{cases} 3 & l'=0 \\ 4 & l'=1 \\ 5 & l'=2 \\ 6 & l'=3 \end{cases}.$$

28. An eNB, applicable to configuring DMRSs, wherein the eNB comprises:

    a configuring unit configured to configure less than six groups of DMRSs in each PRB pair, wherein each group of DMRSs consists of two REs carrying the DMRSs, the two REs carrying the DMRSs being positioned in the same subcarrier and occupying two adjacent OFDM symbols.

29. The eNB according to claim 28, wherein the DMRSs corresponding to one or more ports occupy the first, sixth and/or eleventh REs in a frequency domain by using a code division scheme, or the DMRSs corresponding to one or more ports occupy the second, seventh and/or twelfth REs in a frequency domain by using a code division scheme.

30. The eNB according to claim 28, wherein if four groups of DMRSs are configured in each PRB pair, the configuring unit is configured to:

    keep the densities and positions of the four groups of DMRSs in the time domain constant, and configure the four groups of DMRSs at any two groups of three groups of positions in a frequency domain.

31. The eNB according to claim 28, wherein if four groups of DMRSs are configured in each PRB pair, the configuring unit is configured to:

    keep the densities and positions of the four groups of DMRSs in the time domain constant, configure two groups of the four groups of DMRSs at an intermediate group of three groups of positions in a frequency domain, and configure the other two groups of the four groups of DMRSs at the first and third groups of three groups of positions in a frequency domain, and the DMRSs configured at the first group of positions and the DMRSs configured at the third group of positions being positioned at different slots of the PRB pair.

32. The eNB according to claim 28, wherein if three groups of DMRSs are configured in each PRB pair, the configuring unit is configured to:

    keep the densities and positions of the three groups of DMRSs in the time domain constant, configure the three groups of DMRSs respectively on three groups of positions in a frequency domain, the DMRSs configured at the first group of positions and the DMRSs configured at the third group of positions being positioned at the same slot of the PRB pair, and the DMRSs configured at the second group of positions and the DMRSs configured at the first and third groups of positions being positioned at different slots of the PRB pair.

33. The eNB according to any one of claims 28-32, wherein four OFDM symbols are used to carry DMRSs in one PRB pair, and wherein the four OFDM symbols are divided into two groups, each group consisting of two adjacent OFDM symbols.

34. An eNB, applicable to mapping DMRSs, wherein the eNB comprises:

    a configuring unit configured to configure demodulation reference signals of a PRB pair for an LTE system according to the method for configuring demodulation reference signals as claimed in any one of claims 11-16; and
a mapping unit configured to perform resource mapping on the configured demodulation reference signals according to the following formula:

$$a_{k,l}^{(p)} = w_p(l') \cdot r(3 \cdot l' \cdot N_{RB}^{max,DL} + 3 \cdot n_{PRB} + m') \; ;$$

where, $w_p(i) = \begin{cases} \overline{w}_p(i) & (m'+n_{PRB})\bmod 2 = 0 \\ \overline{w}_p(3-i) & (m'+n_{PRB})\bmod 2 = 1 \end{cases}$     $k = 5m' + N_{sc}^{RB} n_{PRB} + k'$     $k' = \begin{cases} 1 & p \in \{7,8,11,13\} \\ 0 & p \in \{9,10,12,14\} \end{cases}$

$l' = 0,1,2,3$ ;

and where, $a_{k,l}^{(p)}$ is a modulation symbol of a port $p$ carried in an RE with a time domain serial number $l$ and a frequency domain serial number $k$, $r$ is a DMRS modulation symbol sequence generated according to a pseudo-random sequence, $N_{RB}^{max,DL}$ is the number of RBs carried by a maximum downlink bandwidth, $w_p(i)$ is an orthogonal cover code sequence, $N_{sc}^{RB}$ is the number of the subcarriers contained in each PRB pair, $n_{PRB}$ is the serial number of the PRB pair where the DMRS is present, $p$ is the number of the ports, l', k' and m' are intermediate variables;
where,
$m' = 0,1$, or
$m' = 1,2$, or

$m' = 0,2$,    or    $m' = \begin{cases} 0,1 & \textit{for port } 7,8,11,13 \\ 1,2 & \textit{for port } 9,10,12,14 \end{cases}$,    or    $m' = \begin{cases} 1,2 & \textit{for port } 7,8,11,13 \\ 0,1 & \textit{for port } 9,10,12,14 \end{cases}$,    or

$m' = \begin{cases} 1,2 & \textit{if } l' = 0,1 \\ 0,1 & \textit{if } l' = 2,3 \\ 0,1 & \textit{if } l' = 0,1 \\ 1,2 & \textit{if } l' = 2,3 \end{cases} \begin{array}{l} \textit{for port } 7,8,11,13 \\ \\ \textit{for port } 9,10,12,14 \end{array}$,    or    $m' = \begin{cases} 0,1 & \textit{if } l' = 0,1 \\ 1,2 & \textit{if } l' = 2,3 \\ 1,2 & \textit{if } l' = 0,1 \\ 0,1 & \textit{if } l' = 2,3 \end{cases} \begin{array}{l} \textit{for port } 7,8,11,13 \\ \\ \textit{for port } 9,10,12,14 \end{array}$,

or    $m' = \begin{cases} 1,2 & \textit{if } l' = 0,1 \\ 0,1 & \textit{if } l' = 2,3 \end{cases}$,    $m' = \begin{cases} 0,1 & \textit{if } l' = 0,1 \\ 1,2 & \textit{if } l' = 2,3 \end{cases}$,    or    $m' = \begin{cases} 1 & \textit{if } l' = 0,1 \\ 0,2 & \textit{if } l' = 2,3 \end{cases}$,    or

$m' = \begin{cases} 0,2 & \textit{if } l' = 0,1 \\ 1 & \textit{if } l' = 2,3 \end{cases}$,    or    $m' = \begin{cases} 1 & \textit{if } l' = 0,1 \\ 0,2 & \textit{if } l' = 2,3 \\ 0,2 & \textit{if } l' = 0,1 \\ 1 & \textit{if } l' = 2,3 \end{cases} \begin{array}{l} \textit{for port } 7,8,11,13 \\ \\ \textit{for port } 9,10,12,14 \end{array}$,    or

$m' = \begin{cases} 0,2 & \textit{if } l' = 0,1 \\ 1 & \textit{if } l' = 2,3 \\ 1 & \textit{if } l' = 0,1 \\ 0,2 & \textit{if } l' = 2,3 \end{cases} \begin{array}{l} \textit{for port } 7,8,11,13 \\ \\ \textit{for port } 9,10,12,14 \end{array}$.

**35.** A method for performing channel estimation, comprising:

extracting DMRSs from received signals according to positions of DMRSs configured in accordance with the method as claimed in any one of claims 1-9 and 11-16;
generating a DMRS sequence according to the DMRSs configured by an eNB; and

performing channel estimation on a channel passed by the received signals in transmission according to the extracted DMRSs and the generated DMRS sequence.

36. User equipment (UE), comprising:

an extracting unit configured to extract DMRSs from received signals according to positions of DMRSs configured in accordance with the method as claimed in any one of claims 1-9 and 11-16;
a generating unit configured to generate a DMRS sequence according to the DMRSs configured by an eNB; and
a channel estimating unit configured to perform channel estimation on a channel passed by the received signals in transmission according to the extracted DMRSs and the generated DMRS sequence.

37. A communication system, comprising the eNB as claimed in any one of claims 18-34 and the UE as claimed in claim 36.

38. A computer-readable program, wherein when the program is executed in an eNB, the program enables a computer to carry out the method for configuring demodulation reference signals as claimed in any one of claims 1-9 and 11-16 or the method for mapping demodulation reference signals as claimed in claims 10 and 17 in the eNB.

39. A storage medium in which a computer-readable program is stored, wherein the computer-readable program enables a computer to carry out the method for configuring demodulation reference signals as claimed in any one of claims 1-9 and 11-16 or the method for mapping demodulation reference signals as claimed in claims 10 and 17 in an eNB.

40. A computer-readable program, wherein when the program is executed in terminal equipment, the program enables a computer to carry out the method for performing channel estimation as claimed in claim 35 in the terminal equipment.

41. A storage medium in which a computer-readable program is stored, wherein the computer-readable program enables a computer to carry out the method for performing channel estimation as claimed in claim 35 in terminal equipment.

Fig. 1

Fig. 2

301

configuring DMRS being carried by four OFDM symbols in one RB; wherein the four OFDM symbols are divided into two groups, each group consisting of two adjacent OFDM symbols, and the distance between the two groups of OFDM symbols being greater than five OFDM symbols

Fig. 3

DMRSs corresponding to
ports 7, 8, 11 and 13

DMRSs corresponding to
ports 9, 10, 12 and 14

Fig. 4A

DMRSs corresponding to
ports 7, 8, 11 and 13

DMRSs corresponding to
ports 9, 10, 12 and 14

Fig. 4B

DMRSs corresponding to
ports 7, 8, 11 and 13

DMRSs corresponding to
ports 9, 10, 12 and 14

Fig. 4C

DMRSs corresponding to
ports 7, 8, 11 and 13

DMRSs corresponding to
ports 9, 10, 12 and 14

Fig. 4D

DMRSs corresponding to
ports 7, 8, 11 and 13

DMRSs corresponding to
ports 9, 10, 12 and 14

Fig. 4E

Fig. 5

601

configuring demodulation reference signals of a PRB pair for an LTE system

602

performing resource mapping on the configured demodulation reference signals according to the following formula:

$$a_{k,l}^{(p)} = w_p(l') \cdot r(3 \cdot l' \cdot N_{\text{RB}}^{\text{max,DL}} + 3 \cdot n_{\text{PRB}} + m')$$

Fig. 6

701

configuring less than six groups of DMRSs in each PRB pair; wherein each group of DMRSs consists of two REs carrying the DMRSs, the two REs carrying the DMRSs being located in the same subcarrier and occupying two adjacent OFDM symbols

Fig. 7

| A | B |
|---|---|
| C | D |
| E | F |

Fig. 8

⊟ DMRSs corresponding to ports 7, 8, 11 and 13

⊡ DMRSs corresponding to ports 9, 10, 12 and 14

▦ positions with DMRSs being removed

Fig. 9A

DMRSs corresponding to
ports 7, 8, 11 and 13

DMRSs corresponding to
ports 9, 10, 12 and 14

positions with DMRSs being removed

Fig. 9B

DMRSs corresponding to
ports 7, 8, 11 and 13

DMRSs corresponding to
ports 9, 10, 12 and 14

positions with DMRSs being removed

Fig. 9C

DMRSs corresponding to
ports 7, 8, 11 and 13

DMRSs corresponding to
ports 9, 10, 12 and 14

positions with DMRSs being removed

Fig. 9D

DMRSs corresponding to
ports 7, 8, 11 and 13

DMRSs corresponding to
ports 9, 10, 12 and 14

positions with DMRSs being removed

Fig. 9E

DMRSs corresponding to
ports 7, 8, 11 and 13

DMRSs corresponding to
ports 9, 10, 12 and 14

positions with DMRSs being removed

Fig. 10A

DMRSs corresponding to
ports 7, 8, 11 and 13

DMRSs corresponding to
ports 9, 10, 12 and 14

positions with DMRSs being removed

Fig. 10B

DMRSs corresponding to ports 7, 8, 11 and 13

DMRSs corresponding to ports 9, 10, 12 and 14

positions with DMRSs being removed

Fig. 10C

DMRSs corresponding to ports 7, 8, 11 and 13

DMRSs corresponding to ports 9, 10, 12 and 14

positions with DMRSs being removed

Fig. 10D

DMRSs corresponding to ports 7, 8, 11 and 13

DMRSs corresponding to ports 9, 10, 12 and 14

positions with DMRSs being removed

Fig. 11A

DMRSs corresponding to
ports 7, 8, 11 and 13

DMRSs corresponding to
ports 9, 10, 12 and 14

positions with DMRSs being removed

Fig. 11B

DMRSs corresponding to
ports 7, 8, 11 and 13

DMRSs corresponding to
ports 9, 10, 12 and 14

positions with DMRSs being removed

Fig. 11C

DMRSs corresponding to
ports 7, 8, 11 and 13

DMRSs corresponding to
ports 9, 10, 12 and 14

positions with DMRSs being removed

Fig. 11D

DMRSs corresponding to
ports 7, 8, 11 and 13

DMRSs corresponding to
ports 9, 10, 12 and 14

Fig. 12A

DMRSs corresponding to
ports 7, 8, 11 and 13

DMRSs corresponding to
ports 9, 10, 12 and 14

Fig. 12B

DMRSs corresponding to
ports 7, 8, 11 and 13

DMRSs corresponding to
ports 9, 10, 12 and 14

Fig. 12C

DMRSs corresponding to
ports 7, 8, 11 and 13

DMRSs corresponding to
ports 9, 10, 12 and 14

Fig. 12D

DMRSs corresponding to
ports 7, 8, 11 and 13

DMRSs corresponding to
ports 9, 10, 12 and 14

Fig. 13A

DMRSs corresponding to
ports 7, 8, 11 and 13

DMRSs corresponding to
ports 9, 10, 12 and 14

Fig. 13B

1401

configuring demodulation reference signals of a PRB pair for an LTE system

1402

performing resource mapping on the configured demodulation reference signals according to the following formula

$$a_{k,l}^{(p)} = w_p(l') \cdot r(3 \cdot l' \cdot N_{RB}^{max,DL} + 3 \cdot n_{PRB} + m')$$

Fig. 14

151

configuring unit

Fig. 15

161

configuring unit

162

mapping unit

Fig. 16

171

configuring unit

Fig. 17

181

configuring unit

182

mapping unit

Fig. 18

1901

extracting DMRSs from received signals by UE according to positions of the configured DMRSs

1902

generating a DMRS sequence by the UE according to the DMRSs configured by an eNB

1903

performing channel estimation by the UE on a channel passed by the received signals in transmission according to the extracted DMRSs and the generated DMRS sequence

Fig. 19

201

extracting unit

202

generating unit

203

channel estimating unit

Fig. 20

# INTERNATIONAL SEARCH REPORT

| | International application No. |
|---|---|
| | PCT/CN2013/070202 |

### A. CLASSIFICATION OF SUBJECT MATTER

H04W 72/04 (2009.01) i

According to International Patent Classification (IPC) or to both national classification and IPC

### B. FIELDS SEARCHED

Minimum documentation searched (classification system followed by classification symbols)

IPC: H04W; H04Q; H04L; H04B; H04M; H04J

Documentation searched other than minimum documentation to the extent that such documents are included in the fields searched

Electronic data base consulted during the international search (name of data base and, where practicable, search terms used)

DWPI, SIPOABS, IEEE, CPRSABS, CNKI: OFDM, orthogonal frequency division multiplex+, DMRS, demodulation reference signal, bear+, distance, interval, PRB, physical resource block, configur+, allocat+, map+

### C. DOCUMENTS CONSIDERED TO BE RELEVANT

| Category* | Citation of document, with indication, where appropriate, of the relevant passages | Relevant to claim No. |
|---|---|---|
| A | CN 101902301 A (ZTE CORPORATION) 07 December 2010 (07.12.2010) description, paragraphs [0030] to [0038] | 1-10, 18-27, 35-41 |
| A | CN 102271109 A (ZTE CORPORATION) 07 December 2011 (07.12.2011) description, paragraphs [0019] to [0024] | 1-10, 18-27, 35-41 |
| A | WO 2013002544 A2 (LG ELECTRONICS INC.) 03 January 2013 (03.01.2013) the whole document | 1-10, 18-27, 35-41 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 September 2013 (25.09.2013) | 17 October 2013 (17.10.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>　　　　　XU, Hui<br><br>Telephone No. (86-10) 62411341 |
|---|---|

Form PCT/ISA/210 (second sheet) (July 2009)

43

# INTERNATIONAL SEARCH REPORT

| International application No. |
|---|
| PCT/CN2013/070202 |

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
         because they relate to subject matter not required to be searched by this Authority, namely:

2. ☐  Claims Nos.:
         because they relate to parts of the international application that do not comply with the prescribed requirements to such an
         extent that no meaningful international search can be carried out, specifically:

3. ☐  Claims Nos.:
         because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

Independent claims 1, 10, 18, 27 and 35-41 and their dependent claims relate to De-Modulation Reference Signal (DMRS) configuration, mapping and channel estimation, wherein the DMRS is carried on four OFDM symbols in a Physical Resource Block (PRB) pair. Independent claims 11, 17, 28 and 34 and their dependent claims relate to DMRS configuration and mapping, wherein less than six groups of the DMRS are configured in each PRB pair. A same or corresponding technical feature between independent claims 1, 10, 18, 27 and 35-41 and independent claims 11, 17, 28 and 34 is only "the DMRS configuration and mapping". However, "the DMRS configuration and mapping" is well known in the art. Therefore, independent claims 1, 10, 18, 27 and 35-41 and independent claims 11, 17, 28 and 34 do not share a same or corresponding special technical feature that makes a contribution over the prior art, and they are not so linked as to form a single general inventive concept. Hence, they lack unity as required by PCT Rule 13. 1.

1. ⊥    As all required additional search fees were timely paid by the applicant, this international search report covers all searchable
         claims.

2. ☐    As all searchable claims could be searched without effort justifying additional fees, this Authority did not invite payment
         of additional fees.

3. ☐    As only some of the required additional search fees were timely paid by the applicant, this international search report covers
         only those claims for which fees were paid, specifically claims Nos.:

4. ☒    No required additional search fees were timely paid by the applicant. Consequently, this international search report is restricted
         to the invention first mentioned in the claims; it is covered by claims Nos.: 1-10, 18-27 and 35-41

**Remark on protest**      ☐    The additional search fees were accompanied by the applicant's protest and, where applicable, the
                               payment of a protest fee.

                                ☐    The additional search fees were accompanied by the applicant's protest but the applicable protest fee
                                 was not paid within the time limit specified in the invitation.

                                  ☐    No protest accompanied the payment of additional search fees.

Form PCT/ISA /210 (continuation of first sheet (2)) (July 2009)

## INTERNATIONAL SEARCH REPORT
Information on patent family members

| International application No. |
| --- |
| PCT/CN2013/070202 |

| Patent Documents referred in the Report | Publication Date | Patent Family | Publication Date |
| --- | --- | --- | --- |
| CN 101902301 A | 01.12.2010 | US 2012320872 A1 | 20.12.2012 |
| | | MX 2012012065 A1 | 30.11.2012 |
| | | KR 2013044242 A | 02.05.2013 |
| | | EP 2530895 A1 | 05.12.2012 |
| | | WO 2012019398 A1 | 16.02.2012 |
| CN 102271109 A | 07.12.2011 | WO 2011153859 A1 | 15.12.2011 |
| WO 2013002544 A2 | 03.01.2013 | WO 2013002544 A3 | 11.04.2013 |

Form PCT/ISA/210 (patent family annex) (July 2009)